# EUROPEAN PATENT APPLICATION

(11) **EP 4 345 143 A1**
(43) Date of publication of application: **03.04.2024**
(21) Application number: 23183355.9
(22) Date of filing: 04.07.2023
(51) Int. Cl.: C09J 7/38

(54) **PRESSURE-SENSITIVE ADHESIVE SHEET**

(30) Priority: 27.09.2022 JP 2022153600
(71) Applicant: Nitto Denko Corporation, Ibaraki-shi, Osaka 567-8680 (JP)
(72) Inventor: CHIBA, Mizuho, Ibaraki-shi, 567-8680 (JP); KITAGAWA, Taiki, Ibaraki-shi, 567-8680 (JP)
(74) Representative: Müller-Boré & Partner Patentanwälte PartG mbB

(57) **Abstract**

Provided is a pressure-sensitive adhesive sheet that may be used at the time of the transportation of an electronic part, the pressure-sensitive adhesive sheet being capable of contributing to a reduction in production cost, being excellent in positional accuracy of the electronic part, and in fixability and peelability of the electronic part to and from the pressure-sensitive adhesive sheet, and being capable of preventing the contamination of the electronic part and of preventing damage to the electronic part. The pressure-sensitive adhesive sheet includes a pressure-sensitive adhesive laminate including a first pressure-sensitive adhesive layer and a second pressure-sensitive adhesive layer arranged on one surface of the first pressure-sensitive adhesive layer, wherein the first pressure-sensitive adhesive layer includes an active energy ray-curable pressure-sensitive adhesive A, wherein the second pressure-sensitive adhesive layer includes an active energy ray-curable pressure-sensitive adhesive B, wherein the pressure-sensitive adhesive laminate contains a UV-absorbing compound having a UV-absorbing structure, and wherein an amount of the UV-absorbing structure in an outer surface of the second pressure-sensitive adhesive layer and an amount of the UV-absorbing structure in an outer surface of the first pressure-sensitive adhesive layer satisfy a relationship represented by the following formula: amount of UV-absorbing structure in outer surface of first pressure-sensitive adhesive layer/amount of UV-absorbing structure in outer surface of second pressure-sensitive adhesive layer≤0.3.

## Description

This application claims priority to Japanese Patent Application No. 2022-153600 filed on September 27, 2022, which are herein incorporated by references.

The present invention relates to a pressure-sensitive adhesive sheet.

When an electronic part arranged on a predetermined member is remounted onto another member, the following has heretofore been performed: the electronic part is received by a pressure-sensitive adhesive sheet, and then the electronic part is delivered to the other member (e.g., Japanese Patent No. 5875850 and Japanese Patent No. 6053756). For example, when a LED chip is incorporated into an apparatus, the transportation of the LED chip is performed as follows: the LED chip formed on a member is transferred onto and received by the pressure-sensitive adhesive sheet once; and then the LED chip is delivered from the pressure-sensitive adhesive sheet to a predetermined apparatus or member.

In such transportation of the electronic part as described above, a reduction in production cost (e.g., reductions in amounts of required materials, and reductions in required time and required number of steps), the positional accuracy of the electronic part, the achievement of both the fixability and peelability of the electronic part to and from the pressure-sensitive adhesive sheet, the prevention of the contamination of the electronic part, the prevention of damage to the electronic part, and the like have been required.

The present invention has been made to solve the above-mentioned problems of the related art, and an object of the present invention is to provide a pressure-sensitive adhesive sheet that may be used at the time of the transportation of an electronic part, the pressure-sensitive adhesive sheet being capable of contributing to a reduction in production cost, being excellent in positional accuracy of the electronic part, and in fixability and peelability of the electronic part to and from the pressure-sensitive adhesive sheet, and being capable of preventing the contamination of the electronic part and of preventing damage to the electronic part.
[1] According to at least one embodiment of the present invention, there is provided a pressure-sensitive adhesive sheet, including a pressure-sensitive adhesive laminate including a first pressure-sensitive adhesive layer and a second pressure-sensitive adhesive layer arranged on one surface of the first pressure-sensitive adhesive layer, wherein the first pressure-sensitive adhesive layer includes an active energy ray-curable pressure-sensitive adhesive A, wherein the second pressure-sensitive adhesive layer includes an active energy ray-curable pressure-sensitive adhesive B, wherein the pressure-sensitive adhesive laminate contains a UV-absorbing compound having a UV-absorbing structure, and wherein an amount of the UV-absorbing structure in an outer surface of the second pressure-sensitive adhesive layer and an amount of the UV-absorbing structure in an outer surface of the first pressure-sensitive adhesive layer satisfy a relationship represented by the following formula: amount of UV-absorbing structure in outer surface of first pressure-sensitive adhesive layer/amount of UV-absorbing structure in outer surface of second pressure-sensitive adhesive layer≤0.3.
[2] The pressure-sensitive adhesive sheet according to the above-mentioned item [1] may have a transmittance of 50% or less for light having a wavelength of 355 nm.
[3] In the pressure-sensitive adhesive sheet according to the above-mentioned item [1] or [2], the active energy ray-curable pressure-sensitive adhesive B may contain a base polymer having the UV-absorbing structure.
[4] In the pressure-sensitive adhesive sheet according to any one of the above-mentioned items [1] to [3], a HSP distance between a base polymer in the active energy ray-curable pressure-sensitive adhesive A and the UV-absorbing compound in the second pressure-sensitive adhesive layer may be 8 or more.
[5] In the pressure-sensitive adhesive sheet according to any one of the above-mentioned items [1] to [4], the active energy ray-curable pressure-sensitive adhesive B may contain a cross-linking agent "a" having a functional group capable of interacting with a functional group of the UV-absorbing compound.
[6] In the pressure-sensitive adhesive sheet according to any one of the above-mentioned items [1] to [5], the second pressure-sensitive adhesive layer may have an initial indentation elastic modulus of 4 MPa or less at 23°C.
[7] In the pressure-sensitive adhesive sheet according to any one of the above-mentioned items [1] to [6], the second pressure-sensitive adhesive layer may be a layer that has an indentation elastic modulus of 150 MPa or more at 23°C after being irradiated with UV light having an integrated light quantity of 460 mJ/cm².
[8] In the pressure-sensitive adhesive sheet according to any one of the above-mentioned items [1] to [7], the first pressure-sensitive adhesive layer may be a layer that has an indentation elastic modulus of 100 MPa or more at 23°C after being irradiated with UV light having an integrated light quantity of 460 mJ/cm².
[9] The pressure-sensitive adhesive sheet according to any one of the above-mentioned items [1] to [8] may have a thickness of 60 µm or less.

According to at least one embodiment of the present invention, the pressure-sensitive adhesive sheet that may be used at the time of the transportation of an electronic part, the pressure-sensitive adhesive sheet being capable of contributing to a reduction in production cost, being excellent in positional accuracy of the electronic part, and in fixability and peelability of the electronic part to and from the pressure-sensitive adhesive sheet, and being capable of preventing the contamination of the electronic part and of preventing damage to the electronic part, can be provided.

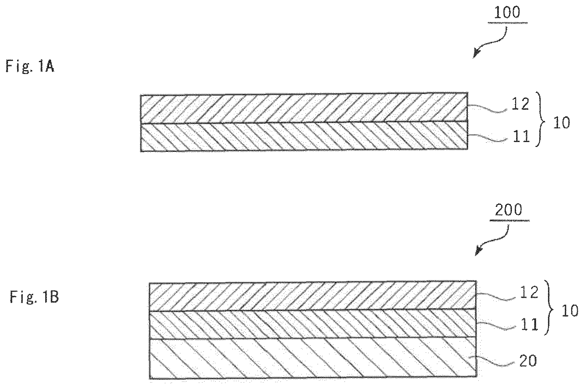

FIG. **1A** is a schematic sectional view of a pressure-sensitive adhesive sheet according to at least one embodiment of the present invention, and FIG. **1B** is a schematic sectional view of a pressure-sensitive adhesive sheet according to at least one embodiment of the present invention.

### A. Outline of Pressure-sensitive Adhesive Sheet

FIG. **1A** is a schematic sectional view of a pressure-sensitive adhesive sheet according to at least one embodiment of the present invention. A pressure-sensitive adhesive sheet **100** according to at least one embodiment of the present invention includes a pressure-sensitive adhesive laminate **10.** The pressure-sensitive adhesive laminate **10** includes a first pressure-sensitive adhesive layer **11** and a second pressure-sensitive adhesive layer **12** arranged on one surface of the first pressure-sensitive adhesive layer. The pressure-sensitive adhesive laminate **10** contains a UV-absorbing compound having a UV-absorbing structure. The first pressure-sensitive adhesive layer **11** includes an active energy ray-curable pressure-sensitive adhesive A. The second pressure-sensitive adhesive layer **12** includes an active energy ray-curable pressure-sensitive adhesive B. FIG. **1B** is a schematic sectional view of a pressure-sensitive adhesive sheet according to at least one embodiment of the present invention. A pressure-sensitive adhesive sheet **200** according to at least one embodiment of the present invention further includes a base material **20,** and the pressure-sensitive adhesive laminate **10** is arranged on at least one side of the base material **20.** The second pressure-sensitive adhesive layer **12** is preferably arranged on the side of the first pressure-sensitive adhesive layer opposite to the base material **20.** In the pressure-sensitive adhesive sheet according to at least one embodiment of the present invention, a release liner may be arranged outside the pressure-sensitive adhesive laminate for the purpose of protecting the pressure-sensitive adhesive surface of the sheet until the sheet is subjected to use, though the liner is not shown. In addition, the pressure-sensitive adhesive sheet may further include any appropriate other layer as long as the effects of the present invention are obtained. In at least one embodiment of the present invention, the pressure-sensitive adhesive laminate is arranged on the base material directly (i.e., without via any other layer). In at least one embodiment of the present invention, as described later, an adherend can be satisfactorily peeled by a reduction in pressure-sensitive adhesive strength of the second pressure-sensitive adhesive layer and the occurrence of strain along with an increase in elastic modulus, and hence the pressure-sensitive adhesive sheet can be formed without arrangement of a layer except the pressure-sensitive adhesive layer for separating the adherend from the pressure-sensitive adhesive sheet (so-called separation layer).

In at least one embodiment of the present invention, the pressure-sensitive adhesive sheet is used in the transfer of an electronic part. More specifically, the pressure-sensitive adhesive sheet may be used in the reception of the electronic part by a laser liftoff process and the transportation of the electronic part including the peeling of the electronic part by laser light irradiation after the reception. Examples of the electronic part include a mini LED and a micro LED. In at least one embodiment of the present invention, the pressure-sensitive adhesive sheet may be used as follows: a plurality of adherends (e.g., electronic parts such as LED chips) arrayed on a substrate (e.g., a hard substrate such as a sapphire substrate) are transferred onto the pressure-sensitive adhesive sheet; and the adherends on the pressure-sensitive adhesive sheet are transferred onto another member. At this time, the second pressure-sensitive adhesive layer is preferably on an adherend side. In at least one embodiment of the present invention, the transfer of the electronic parts from the substrate to the pressure-sensitive adhesive sheet may be performed by a process including irradiating an interface portion between the substrate and the electronic parts with laser light, that is, the laser liftoff process. According to at least one embodiment of the present invention, the electronic parts serving as the adherends can each be arranged on the pressure-sensitive adhesive sheet under, for example, a preferred state in which the tilt of the electronic part is prevented. Accordingly, for example, the reception of the electronic parts by the laser liftoff process can be preferably performed. In addition, when the laser liftoff process is adopted, a contaminant produced from the pressure-sensitive adhesive layer by the influence of the laser light irradiation can be prevented from adhering to the electronic parts serving as the adherends.

The transfer of an adherend from the pressure-sensitive adhesive sheet to another member may be performed by laser light irradiation. In at least one embodiment of the present invention, the pressure-sensitive adhesive laminate contains the UV-absorbing compound, and hence the adherend (electronic part) can be peeled by laser light irradiation. More specifically, when the pressure-sensitive adhesive laminate is irradiated with laser light, the UV-absorbing compound is heated to cause strain in the pressure-sensitive adhesive laminate (substantially the second pressure-sensitive adhesive layer), with the result that the peelability is expressed in a portion irradiated with the laser light. According to at least one embodiment of the present invention, strain can be caused in the pressure-sensitive adhesive laminate in a minute range as described above. Because of this, even when a small electronic part (e.g., 50-micrometer square) is processed, the electronic part can be satisfactorily peeled. Through use of such pressure-sensitive adhesive sheet, the washing of the electronic part to be performed after the peeling can be omitted. In addition, even when a small electronic part that needs to be peeled and a small electronic part that does not need to be peeled are temporarily fixed so as to be adjacent to each other, only the small electronic part that needs to be peeled can be peeled, and unnecessary separation of the small electronic part that does not need to be peeled can be prevented.

In the pressure-sensitive adhesive sheet, the amount of the UV-absorbing structure in the outer surface of the first pressure-sensitive adhesive layer and the amount of the UV-absorbing structure in the outer surface of the second pressure-sensitive adhesive layer satisfy a relationship represented by the following formula. The term "outer surface of the first pressure-sensitive adhesive layer" means the surface of the first pressure-sensitive adhesive layer opposite to the second pressure-sensitive adhesive layer, and the term "outer surface of the second pressure-sensitive adhesive layer" means the surface of the second pressure-sensitive adhesive layer opposite to the first pressure-sensitive adhesive layer.

Amount of UV-absorbing structure in outer surface of first pressure-sensitive adhesive layer/amount of UV-absorbing structure in outer surface of second pressure-sensitive adhesive layer≤0.3

The term "UV-absorbing structure" as used herein is a concept encompassing a UV-absorbing structure in a low-molecular weight compound (so-called UV absorber) and a UV-absorbing structure bonded to a high-molecular weight compound (polymer). In this specification, for convenience, a low-molecular weight compound and a high-molecular weight compound each including the UV-absorbing structure are collectively referred to as "UV-absorbing compounds."

In at least one embodiment of the present invention, the amount of the UV-absorbing structure is defined as an amount identified by FT-IR analysis. The amount of the UV-absorbing structure may be identified by the following method:
(i) the UV-absorbing structure in a pressure-sensitive adhesive layer sample is identified by a predetermined method;
(ii) an (amount of UV-absorbing structure) versus (intensity of peak derived from UV-absorbing structure) calibration curve is obtained for the identified UV-absorbing structure by using the group of other pressure-sensitive adhesive layer samples in each of which the content of the structure is known through FT-IR measurement; and
(iii) the intensity of a peak derived from the UV-absorbing structure of the pressure-sensitive adhesive layer sample is elucidated by the FT-IR measurement of the sample, and the amount of the UV-absorbing structure is identified on the basis of the above-mentioned calibration curve.

In the above-mentioned item (i), the UV-absorbing structure may be identified by any appropriate analysis method. For example, the FT-IR analysis, NMR analysis, TOF-SIMS, Raman spectroscopy, and a combination thereof are each used. When a formulation for forming the pressure-sensitive adhesive layer is clear, the identification of the structure by such analysis may be omitted.

In addition, in the above-mentioned item (ii), a peak intensity derived from a base polymer (e.g., an acrylic polymer) for forming each of the other pressure-sensitive adhesive layer samples is adopted as a reference, and the above-mentioned calibration curve can be obtained on the basis of a ratio between the peak intensity and the peak intensity derived from the UV-absorbing structure. For example, the peak intensity may be a peak intensity at the maximum absorption wavenumber of each compound or structure.

The amount of the UV-absorbing structure may be identified by, for example, NMR analysis, TOF-SIMS, or Raman spectroscopy.

In at least one embodiment of the present invention, when the number of the pressure-sensitive adhesive layers is set to 2 or more, and the UV-absorbing compound is caused to be unevenly present in the second pressure-sensitive adhesive layer on the adherend side, the above-mentioned action exhibited by laser light irradiation can be concentrated on the surface of the layer on which the peeling of the adherend is to be caused. As a result, the peelability thereof can be preferably expressed by irradiating the surface with low-energy laser light. In addition, at the time of the irradiation with the laser light, the decomposition of the pressure-sensitive adhesive layer at a site that is lowly involved in the peelability is suppressed, and as a result, a preventing effect on the adhesion of a contaminant produced from the pressure-sensitive adhesive laminate to an electronic part serving as the adherend becomes significant.

As described above, the pressure-sensitive adhesive laminate (i.e., the first pressure-sensitive adhesive layer and the second pressure-sensitive adhesive layer) includes the active energy ray-curable pressure-sensitive adhesives. The irradiation of the pressure-sensitive adhesive sheet containing the active energy ray-curable pressure-sensitive adhesives with an active energy ray reduces the pressure-sensitive adhesive strength of the entirety of the pressure-sensitive adhesive laminate. When the laser light irradiation is performed as described above after the reduction in pressure-sensitive adhesive strength by the irradiation of the entirety of the pressure-sensitive adhesive laminate of the pressure-sensitive adhesive sheet having bonded thereto an adherend (electronic part) with the active energy ray, an adhesive residue after the peeling of the adherend can be prevented. The use of such pressure-sensitive adhesive sheet can omit the washing of the electronic part to be performed after the peeling. In addition, the formation of the pressure-sensitive adhesive laminate containing the active energy ray-curable pressure-sensitive adhesives can reduce a laser output at the time of the peeling. The pressure-sensitive adhesive sheet according to at least one embodiment of the present invention expresses its peelability with low-output laser light, and hence the use of the pressure-sensitive adhesive sheet can reduce damage to the electronic part serving as the adherend at the time of the peeling to prevent the breakage of the electronic part. In addition, the peelability can be expressed with laser light at such an output as not to cause the decomposition (pyrolysis) of the pressure-sensitive adhesive laminate itself, and hence the contamination of the electronic part serving as the adherend by a decomposition product of the pressure-sensitive adhesive layer can be prevented. Examples of the active energy ray include a gamma ray, UV light, visible light, an infrared ray (heat ray), a radio wave, an alpha ray, a beta ray, an electron beam, a plasma flow, an ionizing ray, and a particle beam. Of those, UV light is preferred.

The transmittance of the pressure-sensitive adhesive sheet according to at least one embodiment of the present invention for light having a wavelength of 355 nm is preferably 50% or less, more preferably 40% or less, still more preferably 30% or less. When the transmittance falls within such ranges, a laser output at the time of the peeling of the adherend can be reduced. The light transmittance of the pressure-sensitive adhesive sheet is a light transmittance of the pressure-sensitive adhesive sheet in its thickness direction, and is a light transmittance to be measured for all the layers for forming the pressure-sensitive adhesive sheet. In at least one embodiment of the present invention, the transmittance of the pressure-sensitive adhesive sheet for light having a wavelength of 355 nm may be controlled by adjusting the content of the UV-absorbing compound to be incorporated into the pressure-sensitive adhesive laminate. In addition, the transmittance of the pressure-sensitive adhesive sheet for light having a wavelength of 355 nm may also be controlled by the configuration of the base polymer and the photopolymerization initiator for forming the pressure-sensitive adhesive layer. For example, the transmittance of the pressure-sensitive adhesive sheet for light having a wavelength of 355 nm may be controlled by the kind, amount, and the like of the photopolymerization initiator in the pressure-sensitive adhesive layer, in particular, compatibility between the photopolymerization initiator and the base polymer.

The visible light transmittance of the pressure-sensitive adhesive sheet is preferably 50% or more, more preferably 60% or more, still more preferably 70% or more. When the visible light transmittance falls within such ranges, there can be obtained such a pressure-sensitive adhesive sheet that when an adherend is peeled by laser light irradiation, the adherend serving as a peeling object can be satisfactorily viewed through the pressure-sensitive adhesive sheet. Although the visible light transmittance of the pressure-sensitive adhesive sheet is preferably as high as possible, its upper limit is, for example, 95% (preferably 100%) .

The haze value of the pressure-sensitive adhesive sheet is preferably 70% or less, more preferably 65% or less. When the haze value falls within such ranges, there can be obtained such a pressure-sensitive adhesive sheet that when an adherend is peeled by laser light irradiation, the adherend serving as a peeling object can be satisfactorily viewed through the pressure-sensitive adhesive sheet. Although the haze value of the pressure-sensitive adhesive sheet is preferably as low as possible, its lower limit is, for example, 0.1%.

An initial pressure-sensitive adhesive strength A at 23°C immediately after the second pressure-sensitive adhesive layer of the pressure-sensitive adhesive sheet is bonded to a stainless-steel plate is preferably from 0.1 N/20 mm to 15 N/20 mm, more preferably from 0.5 N/20 mm to 10 N/20 mm. When the initial pressure-sensitive adhesive strength A falls within such ranges, a pressure-sensitive adhesive sheet that can satisfactorily hold an adherend can be obtained. The pressure-sensitive adhesive strength is measured in conformity with JIS Z 0237:2000. Specifically, the measurement is performed by: reciprocating a 2-kilogram roller once to bond the pressure-sensitive adhesive sheet to the stainless-steel plate (arithmetic average surface roughness Ra: 50±25 nm); leaving the resultant to stand under 23°C for 30 minutes; and then peeling the pressure-sensitive adhesive sheet under the conditions of a peel angle of 180° and a peel rate (tensile rate) of 300 mm/min. Although the pressure-sensitive adhesive strength of the pressure-sensitive adhesive layer is changed by active energy ray irradiation and laser light irradiation, the term "initial pressure-sensitive adhesive strength" as used herein means a pressure-sensitive adhesive strength before the active energy ray irradiation and the laser light irradiation.

In at least one embodiment of the present invention, a pressure-sensitive adhesive strength B (hereinafter also referred to as "post-curing pressure-sensitive adhesive strength B") at 23°C after the second pressure-sensitive adhesive layer of the pressure-sensitive adhesive sheet is bonded to a stainless-steel plate and irradiated with UV light having an integrated light quantity of 300 mJ/cm² is preferably 0.2 N/20 mm or less, more preferably from 0.01 N/20 mm to 0.2 N/20 mm, still more preferably from 0.02 N/20 mm to 0.15 N/20 mm. When the pressure-sensitive adhesive strength B falls within such ranges, a pressure-sensitive adhesive sheet having a reduced amount of an adhesive residue can be obtained. The UV irradiation is performed by, for example, irradiating the pressure-sensitive adhesive layer with UV light from a highpressure mercury lamp (characteristic wavelength: 365 nm, integrated light quantity: 300 mJ/cm²) through use of a UV irradiation apparatus (manufactured by Nitto Seiki Co., Ltd., product name: "UM-810").

The reduction ratio of the post-curing pressure-sensitive adhesive strength B to the initial pressure-sensitive adhesive strength A is preferably 90% or more, more preferably 95% or more. When the reduction ratio falls within such ranges, a pressure-sensitive adhesive sheet excellent in peelability can be obtained. The reduction ratio (%) may be determined by the expression: (initial pressure-sensitive adhesive strength A - post-curing pressure-sensitive adhesive strength B)/initial pressure-sensitive adhesive strength A × 100.

An initial pressure-sensitive adhesive strength A' at 23°C immediately after the first pressure-sensitive adhesive layer of the pressure-sensitive adhesive sheet is bonded to a stainless-steel plate is preferably from 0.1 N/20 mm to 15 N/20 mm, more preferably from 0.5 N/20 mm to 10 N/20 mm.

In at least one embodiment of the present invention, a pressure-sensitive adhesive strength B' (hereinafter also referred to as "post-curing pressure-sensitive adhesive strength B' ") at 23°C after the first pressure-sensitive adhesive layer of the pressure-sensitive adhesive sheet is bonded to a stainless-steel plate and irradiated with UV light having an integrated light quantity of 300 mJ/cm² is preferably 0.2 N/20 mm or less, more preferably from 0.01 N/20 mm to 0.2 N/20 mm, still more preferably from 0.02 N/20 mm to 0.15 N/20 mm.

The thickness of the pressure-sensitive adhesive sheet is preferably from 1 µm to 300 µm, more preferably from 5 um to 200 um. In at least one embodiment of the present invention, the thickness of the pressure-sensitive adhesive sheet is 60 µm or less. In at least one embodiment of the present invention, a relatively thick pressure-sensitive adhesive sheet can be obtained by forming the sheet from two layers and causing the UV-absorbing compound to be unevenly present in one of the layers.

### B. Pressure-sensitive Adhesive Laminate

As described above, the amount of the UV-absorbing structure in the outer surface of the first pressure-sensitive adhesive layer and the amount of the UV-absorbing structure in the outer surface of the second pressure-sensitive adhesive layer satisfy a relationship represented by the following formula.

Amount of UV-absorbing structure in outer surface of first pressure-sensitive adhesive layer/amount of UV-absorbing structure in outer surface of second pressure-sensitive adhesive layer≤0.3

The ratio (amount of UV-absorbing structure in outer surface of first pressure-sensitive adhesive layer/amount of UV-absorbing structure in outer surface of second pressure-sensitive adhesive layer) is preferably 0.2 or less, more preferably 0.1 or less, still more preferably 0.08 or less, particularly preferably 0.05 or less, most preferably 0. When the ratio falls within such ranges, the above-mentioned effect becomes significant. The UV-absorbing compound present in the first pressure-sensitive adhesive layer may be a product that has migrated from the second pressure-sensitive adhesive layer.

The thickness of the pressure-sensitive adhesive laminate is preferably from 1 um to 100 µm, more preferably from 2 um to 80 um, still more preferably from 3 um to 60 µm, particularly preferably from 5 µm to 40 um. In at least one embodiment of the present invention, the thickness of the pressure-sensitive adhesive laminate is 60 µm or less. In at least one embodiment of the present invention, a relatively thick pressure-sensitive adhesive laminate can be obtained by forming the laminate from two or more pressure-sensitive adhesive layers and causing the UV-absorbing compound to be unevenly present in one of the layers.

### B-1. First Pressure-sensitive Adhesive Layer

As described above, the first pressure-sensitive adhesive layer includes the active energy ray-curable pressure-sensitive adhesive A. In at least one embodiment of the present invention, an active energy ray-curable pressure-sensitive adhesive (A1), which contains a base polymer serving as a parent agent and an active energy ray-reactive compound (monomer or oligomer) that can be bonded to the base polymer, is used as the active energy ray-curable pressure-sensitive adhesive A. In at least one embodiment of the present invention, an active energy ray-curable pressure-sensitive adhesive (A2) containing an active energy ray-reactive polymer as the base polymer is used. Compounds described in the section B-2 to be described later may be used as the base polymer, the active energy ray-reactive compound that can be bonded to the base polymer, and the active energy ray-reactive polymer. In at least one embodiment of the present invention, a pressure-sensitive adhesive containing an acrylic polymer as a base polymer is used. In addition, the active energy ray-curable pressure-sensitive adhesive A may further contain any appropriate additive as required. Additives such as a cross-linking agent given in the section B-2 to be described later may each be used as the additive. It is preferred that no UV absorber be added to the active energy ray-curable pressure-sensitive adhesive A at the time of its preparation. In addition, the base polymer in the active energy ray-curable pressure-sensitive adhesive A is preferably free of any UV-absorbing structure.

In at least one embodiment of the present invention, a HSP distance between the base polymer (preferably an acrylic polymer) in the active energy ray-curable pressure-sensitive adhesive A for forming the first pressure-sensitive adhesive layer and the UV-absorbing compound in the second pressure-sensitive adhesive layer is preferably 8 or more, more preferably 10 or more. In this specification, a Hansen solubility parameter (HSP) is obtained by dividing a Hildebrand solubility parameter δ into three components, that is, a dispersion term δ_{d}, a polar term δₚ, and a hydrogen bond term δₕ, and representing the components in a three-dimensional space, and a relationship of δ²=δ_{d}²+δₚ²+δₕ² is valid. The dispersion term δ_{d} represents an effect exhibited by a dispersion force, the polar term δₚ represents an effect exhibited by an inter-dipole force, and the hydrogen bond term δₕ represents an effect exhibited by a hydrogen bond force. A HSP distance Ra between two substances is represented by Ra={4Δδ_{d}²+Δδₚ²+Δδₕ²}^{1/2} where Δδ_{d} represents a difference between the dispersion terms of the two substances, Δδₚ represents a difference between the polar terms thereof, and Δδₕ represents a difference between the hydrogen bond terms thereof. As the Ra becomes smaller, compatibility between the substances becomes higher, and as the Ra becomes larger, the compatibility becomes lower. The details of the Hansen solubility parameter are described in "Hansen Solubility Parameters: A User's Handbook" (CRC Press, 2007) written by Charles M. Hansen, and the HSP of a substance whose literature value and the like are unknown may be calculated with computer software "Hansen Solubility Parameters in Practice (HSPiP)."

When such a base polymer that a HSP distance between itself and the UV-absorbing compound in the second pressure-sensitive adhesive layer is 8 or more is used as the base polymer in the active energy ray-curable pressure-sensitive adhesive A as described above, that is, the first pressure-sensitive adhesive layer is formed from a base polymer having low compatibility with the UV-absorbing compound, the migration of the UV-absorbing compound to the first pressure-sensitive adhesive layer can be prevented. As a result, the UV-absorbing compound is unevenly present in a preferred manner, and hence the effects of the present invention become significant.

The thickness of the first pressure-sensitive adhesive layer is preferably from 1 µm to 60 µm, more preferably from 2 µm to 30 µm, still more preferably from 3 µm to 20 µm.

The first pressure-sensitive adhesive layer is preferably a layer that has an indentation elastic modulus of 100 MPa or more at 23°C after being irradiated with UV light having an integrated light quantity of 460 mJ/cm², and the indentation elastic modulus is more preferably 200 MPa or more, particularly preferably 300 MPa or more. When the pressure-sensitive adhesive sheet includes the first pressure-sensitive adhesive layer that may have such indentation elastic modulus after being irradiated with the UV light, the irradiation of the pressure-sensitive adhesive layer with low-energy laser light causes strain in the layer, and as a result, enables satisfactory peeling of its adherend (electronic part). In addition, the contamination of the electronic part at the time of the peeling can be prevented. The upper limit of the indentation elastic modulus of the first pressure-sensitive adhesive layer after the irradiation with the UV light having an integrated light quantity of 460 mJ/cm² is, for example, 8,000 MPa (preferably 5,000 MPa, more preferably 4,000 MPa). The indentation elastic modulus may be measured at an indentation speed of 10 nm/s and an indentation depth of 100 nm by a single indentation method at 23°C.

### B-2. Second Pressure-sensitive Adhesive Layer

### (Active Energy Ray-curable Pressure-sensitive Adhesive)

As described above, the second pressure-sensitive adhesive layer includes the active energy ray-curable pressure-sensitive adhesive B. In at least one embodiment of the present invention, an active energy ray-curable pressure-sensitive adhesive (B1), which contains a base polymer serving as a parent agent and an active energy ray-reactive compound (monomer or oligomer) that can be bonded to the base polymer, is used as the active energy ray-curable pressure-sensitive adhesive B. In at least one embodiment of the present invention, an active energy ray-curable pressure-sensitive adhesive (B2) containing an active energy ray-reactive polymer as the base polymer is used. The base polymer preferably has a functional group that can react with a photopolymerization initiator. Examples of the functional group include a hydroxyl group and a carboxyl group.

Examples of the base polymer to be used in the pressure-sensitive adhesive (B1) include: rubber-based polymers, such as a natural rubber, a polyisobutylene rubber, a styrenebutadiene rubber, a styrene-isoprene-styrene block copolymer rubber, a reclaimed rubber, a butyl rubber, a polyisobutylene rubber, and a nitrile rubber (NBR); silicone-based polymers; and acrylic polymers. Those polymers may be used alone or in combination thereof. Of those, an acrylic polymer is preferred.

Examples of the acrylic polymer include: homopolymers or copolymers of hydrocarbon group-containing (meth)acrylic acid esters, such as a (meth)acrylic acid alkyl ester, a (meth)acrylic acid cycloalkyl ester, and a (meth)acrylic acid aryl ester; and copolymers of the hydrocarbon group-containing (meth)acrylic acid esters and other copolymerizable monomers. Examples of the (meth)acrylic acid alkyl ester include (meth)acrylic acid methyl ester, ethyl ester, propyl ester, isopropyl ester, butyl ester, isobutyl ester, s-butyl ester, t-butyl ester, pentyl ester, isopentyl ester, hexyl ester, heptyl ester, octyl ester, 2-ethylhexyl ester, isooctyl ester, nonyl ester, decyl ester, isodecyl ester, undecyl ester, dodecyl ester, that is, lauryl ester, tridecyl ester, tetradecyl ester, hexadecyl ester, octadecyl ester, and eicosyl ester. Examples of the (meth)acrylic acid cycloalkyl ester include (meth)acrylic acid cyclopentyl ester and cyclohexyl ester. Examples of the (meth)acrylic acid aryl ester include phenyl (meth)acrylate and benzyl (meth)acrylate. The content of a constituent unit derived from the hydrocarbon group-containing (meth)acrylic acid ester is preferably 40 parts by weight or more, more preferably 60 parts by weight or more with respect to 100 parts by weight of the base polymer.

Examples of the other copolymerizable monomer include functional group-containing monomers, such as a carboxy group-containing monomer, an acid anhydride monomer, a hydroxy group-containing monomer, a glycidyl group-containing monomer, a sulfonic acid group-containing monomer, a phosphoric acid group-containing monomer, acrylamide, and acrylonitrile. Examples of the carboxy group-containing monomer include acrylic acid, methacrylic acid, carboxyethyl (meth)acrylate, carboxypentyl (meth)acrylate, itaconic acid, maleic acid, fumaric acid, and crotonic acid. Examples of the acid anhydride monomer include maleic anhydride and itaconic anhydride. Examples of the hydroxy group-containing monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl (meth)acrylate. Examples of the glycidyl group-containing monomer include glycidyl (meth)acrylate and methylglycidyl (meth)acrylate. Examples of the sulfonic acid group-containing monomer include styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid. An example of the phosphoric acid group-containing monomer is 2-hydroxyethylacryloyl phosphate. An example of the acrylamide is N-acryloylmorpholine. Those monomers may be used alone or in combination thereof. The content of a constituent unit derived from the copolymerizable monomer is preferably 60 parts by weight or less, more preferably 40 parts by weight or less with respect to 100 parts by weight of the base polymer.

The acrylic polymer may contain a constituent unit derived from a polyfunctional monomer for forming a cross-linked structure in a polymer skeleton thereof. Examples of the polyfunctional monomer include hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy (meth)acrylate (that is, polyglycidyl (meth)acrylate), polyester (meth)acrylate, and urethane (meth)acrylate. Those monomers may be used alone or in combination thereof. The content of the constituent unit derived from the polyfunctional monomer is preferably 40 parts by weight or less, more preferably 30 parts by weight or less with respect to 100 parts by weight of the base polymer.

The weight-average molecular weight of the acrylic polymer is preferably from 100,000 to 3,000,000, more preferably from 200,000 to 2,000,000. The weight-average molecular weight may be measured by GPC (solvent: THF).

The active energy ray-reactive compound that may be used in the pressure-sensitive adhesive (B1) is, for example, a photoreactive monomer or oligomer having a functional group having a polymerizable carbon-carbon multiple bond, such as an acryloyl group, a methacryloyl group, a vinyl group, an allyl group, or an acetylene group. Specific examples of the photoreactive monomer include: esterified products of (meth)acrylic acid and polyhydric alcohols, such as trimethylolpropane tri(meth)acrylate, tetramethylolmethane tetra(meth)acrylate, pentaerythritol tri(meth)acrylate, pentaerythritol tetra(meth)acrylate, dipentaerythritol monohydroxypenta(meth)acrylate, dipentaerythritol hexa(meth)acrylate, 1,4-butanediol di(meth)acrylate, 1,6-hexanediol di(meth)acrylate, and polyethylene glycol di(meth)acrylate; polyfunctional urethane (meth)acrylate; epoxy (meth)acrylate; and oligoester (meth)acrylates. In addition, a monomer, such as methacryloisocyanate, 2-methacryloyloxyethyl isocyanate (2-isocyanatoethyl methacrylate), or m-isopropenyl-α,α-dimethylbenzyl isocyanate, may be used. Specific examples of the photoreactive oligomer include dimers to pentamers of the above-mentioned monomers. The molecular weight of the photoreactive oligomer is preferably from 100 to 3,000.

In at least one embodiment of the present invention, a polyfunctional (meth)acrylate having five or more functional groups or an oligomer of the polyfunctional (meth)acrylate having five or more functional groups is used as the active energy ray-reactive compound. The use of such active energy ray-reactive compound enables the formation of a pressure-sensitive adhesive layer that may have high elasticity by being irradiated with an active energy ray (e.g., UV light). When the pressure-sensitive adhesive layer can be increased in elastic modulus, the above-mentioned peeling operation can be performed with low-output laser light.

In addition, a monomer, such as epoxidized butadiene, glycidyl methacrylate, acrylamide, or vinylsiloxane, or an oligomer formed of the monomer may be used as the active energy ray-reactive compound.

Further, a mixture of an organic salt such as an onium salt, and a compound having a plurality of heterocycles in a molecule thereof may be used as the active energy ray-reactive compound. When the mixture is irradiated with an active energy ray (e.g., UV light or an electron beam), the organic salt cleaves to produce an ion, and the ion serves as an initiation species to cause the ring-opening reaction of the heterocycles. Thus, a three-dimensional network structure can be formed. Examples of the organic salt include an iodonium salt, a phosphonium salt, an antimonium salt, a sulfonium salt, and a borate salt. Examples of the heterocycles in the compound having the plurality of heterocycles in a molecule thereof include oxirane, oxetane, oxolane, thiirane, and aziridine.

The content of the active energy ray-reactive compound in the pressure-sensitive adhesive (B1) is preferably from 0.1 part by weight to 500 parts by weight, more preferably from 5 parts by weight to 300 parts by weight, still more preferably from 40 parts by weight to 150 parts by weight with respect to 100 parts by weight of the base polymer.

The active energy ray-reactive polymer (base polymer) in the pressure-sensitive adhesive (B2) is, for example, a polymer having a functional group having a carbon-carbon multiple bond, such as an acryloyl group, a methacryloyl group, a vinyl group, an allyl group, or an acetylene group. Specific examples of the active energy ray-reactive polymer include: polymers including polyfunctional (meth)acrylates; photocationically polymerizable polymers; cinnamoyl group-containing polymers such as polyvinyl cinnamate; diazotized amino novolac resins; and polyacrylamide.

In at least one embodiment of the present invention, there is used an active energy ray-reactive polymer formed by introducing an active energy ray-polymerizable carbon-carbon multiple bond into a side chain of the above-mentioned acrylic polymer, the main chain thereof, and/or a terminal of the main chain. An approach to introducing a radiation-polymerizable carbon-carbon double bond into the acrylic polymer is, for example, a method including: copolymerizing raw material monomers including a monomer having a predetermined functional group (first functional group) to provide the acrylic polymer; and then subjecting a compound having a predetermined functional group (second functional group) that can react with the first functional group to be bonded thereto and the radiation-polymerizable carbon-carbon double bond to a condensation reaction or an addition reaction with the acrylic polymer while maintaining the radiation polymerizability of the carbon-carbon double bond.

Examples of the combination of the first functional group and the second functional group include: a carboxy group and an epoxy group; an epoxy group and a carboxy group; a carboxy group and an aziridyl group; an aziridyl group and a carboxy group; a hydroxy group and an isocyanate group; and an isocyanate group and a hydroxy group. Of those combinations, the combination of a hydroxy group and an isocyanate group or the combination of an isocyanate group and a hydroxy group is preferred from the viewpoint of the ease with which a reaction between the groups is tracked. In addition, technical difficulty in producing a polymer having an isocyanate group having high reactivity is high, and hence a case in which the first functional group of the acrylic polymer side is a hydroxy group and the second functional group is an isocyanate group is more preferred from the viewpoint of the ease with which the acrylic polymer is produced or obtained. In this case, examples of an isocyanate compound having both of a radiation-polymerizable carbon-carbon double bond and an isocyanate group serving as the second functional group include methacryloyl isocyanate, 2-methacryloyloxyethyl isocyanate, and m-isopropenyl-α,α-dimethylbenzyl isocyanate. In addition, a polymer containing a constituent unit derived from the above-mentioned hydroxy group-containing monomer is preferred as the acrylic polymer having the first functional group, and a polymer containing a constituent unit derived from an ether-based compound, such as 2-hydroxyethyl vinyl ether, 4-hydroxybutyl vinyl ether, or diethylene glycol monovinyl ether, is also preferred.

The pressure-sensitive adhesive (B2) may further contain the active energy ray-reactive compound (monomer or oligomer).

The active energy ray-curable pressure-sensitive adhesive B contains the UV-absorbing compound. The UV-absorbing compound is produced by preparing the active energy ray-curable pressure-sensitive adhesive B through the addition of a UV absorber.

### (UV Absorber)

Any appropriate UV absorber may be used as the UV absorber as long as the absorber is a compound that absorbs UV light (having a wavelength of, for example, 355 nm). Examples of the UV absorber include a benzotriazole-based UV absorber, a benzophenone-based UV absorber, a triazine-based UV absorber, a salicylate-based UV absorber, and a cyanoacrylate-based UV absorber. Of those, a triazine-based UV absorber or a benzotriazole-based UV absorber is preferred, and a triazine-based UV absorber is particularly preferred. The triazine-based UV absorber more preferably includes a compound having a hydroxy group, and is particularly preferably a UV absorber (hydroxyphenyltriazine-based UV absorber) including a hydroxyphenyltriazine-based compound.

Examples of the hydroxyphenyltriazine-based UV absorber include a reaction product of 2-(4,6-bis(2,4-dimethylphenyl)-1,3,5-triazin-2-yl)-5-hydroxyphenyl and a [(C10-C16 (mainly C12-C13) alkyloxy)methyl]oxirane (product name: "TINUVIN 400", manufactured by BASF), 2-[4,6-bis(2,4-dimethylphenyl)-1,3,5-triazin-2-yl]-5-[3-(dodecyloxy)-2-hydroxypropoxy]phenol), a reaction product of 2-(2,4-dihydroxyphenyl)-4,6-bis-(2,4-dimethylphenyl)-1,3,5-triazine and (2-ethylhexyl)-glycidic acid ester (product name: "TINUVIN 405", manufactured by BASF), 2,4-bis(2-hydroxy-4-butoxyphenyl)-6-(2,4-dibutoxyphenyl)-1,3,5-triazine (product name: "TINUVIN 460", manufactured by BASF), 2-(4,6-diphenyl-1,3,5-triazin-2-yl)-5-[(hexyl)oxy]-phenol (product name: "TINUVIN 1577", manufactured by BASF), 2-(4,6-diphenyl-1,3,5-triazin-2-yl)-5-[2-(2-ethylhexanoyloxy)ethoxy]-phenol (product name: "ADK STAB LA-46", manufactured by ADEKA Corporation), 2-(2-hydroxy-4-[1-octyloxycarbonylethoxy]phenyl)-4,6-bis(4-phenylphenyl)-1,3,5-triazine (product name: "TINUVIN 479", manufactured by BASF), and a product available under the product name "TINUVIN 477" from BASF.

Examples of the benzotriazole-based UV absorber (benzotriazole-based compound) include 2-(2-hydroxy-5-tert-butylphenyl)-2H-benzotriazole (product name: "TINUVIN PS", manufactured by BASF), an ester compound of benzenepropanoic acid and 3-(2H-benzotriazol-2-yl)-5-(1,1-dimethylethyl)-4-hydroxy (C7-9 side chain and linear alkyl) (product name: "TINUVIN 384-2", manufactured by BASF), a mixture of octyl 3-[3-tert-butyl-4-hydroxy-5-(5-chloro-2H-benzotriazol-2-yl)phenyl] propionate and 2-ethylhexyl-3-[3-tert-butyl-4-hydroxy-5-(5-chloro-2H-benzotriazol-2-yl)phenyl] propionate (product name: "TINUVIN 109", manufactured by BASF), 2-(2H-benzotriazol-2-yl)-4,6-bis(1-methyl-1-phenylethyl)phenol (product name: "TINUVIN 900", manufactured by BASF), 2-(2H-benzotriazol-2-yl)-6-(1-methyl-1-phenylethyl)-4-(1,1,3,3-tetramethylbutyl)phenol (product name: "TINUVIN 928", manufactured by BASF), a reaction product of methyl 3-(3-(2H-benzotriazol-2-yl)-5-tert-butyl-4-hydroxyphenyl) propionate/polyethylene glycol 300 (product name: "TINUVIN 1130", manufactured by BASF), 2-(2H-benzotriazol-2-yl)-p-cresol (product name: "TINUVIN P", manufactured by BASF), 2-(2H-benzotriazol-2-yl)-4,6-bis(1-methyl-1-phenylethyl)phenol (product name: "TINUVIN 234", manufactured by BASF), 2-[5-chloro-2H-benzotriazol-2-yl]-4-methyl-6-(tert-butyl)phenol (product name: "TINUVIN 326", manufactured by BASF), 2-(2H-benzotriazol-2-yl)-4,6-di-tert-pentylphenol (product name: "TINUVIN 328", manufactured by BASF), 2-(2H-benzotriazol-2-yl)-4-(1,1,3,3-tetramethylbutyl)phenol (product name: "TINUVIN 329", manufactured by BASF), 2,2'-methylenebis[6-(2H-benzotriazol-2-yl)-4-(1,1,3,3-tetramethylbutyl)phenol] (product name: "TINUVIN 360", manufactured by BASF), a reaction product of methyl 3-(3-(2H-benzotriazol-2-yl)-5-tert-butyl-4-hydroxyphenyl) propionate and polyethylene glycol 300 (product name: "TINUVIN 213", manufactured by BASF), 2-(2H-benzotriazol-2-yl)-6-dodecyl-4-methylphenol (product name: "TINUVIN 571", manufactured by BASF), 2-[2-hydroxy-3-(3,4,5,6-tetrahydrophthalimido-methyl)-5-methylphenyl]benzotriazole (product name: "Sumisorb 250", manufactured by Sumitomo Chemical Co., Ltd.), 2-(3-tert-butyl-2-hydroxy-5-methylphenyl)-5-chloro-2H-benzotriazole (product name: "SEESORB 703", manufactured by Shipro Kasei Kaisha, Ltd.), 2-(2H-benzotriazol-2-yl)-4-methyl-6-(3,4,5,6-tetrahydrophthalimidylmethyl)phenol (product name: "SEESORB 706", manufactured by Shipro Kasei Kaisha, Ltd.), 2-(4-benzoyloxy-2-hydroxyphenyl)-5-chloro-2H-benzotriazole (product name: "SEESORB 7012BA", manufactured by Shipro Kasei Kaisha, Ltd.), 2-tert-butyl-6-(5-chloro-2H-benzotriazol-2-yl)-4-methylphenol (product name: "KEMISORB 73", manufactured by Chemipro Kasei Kaisha, Ltd.), 2,2'-methylenebis[6-(2H-benzotriazol-2-yl)-4-tert-octylphenol] (product name: "ADK STAB LA-31", manufactured by ADEKA Corporation), 2-(2H-benzotriazol-2-yl)-p-cellulose (product name: "ADK STAB LA-32", manufactured by ADEKA Corporation), and 2-(5-chloro-2H-benzotriazol-2-yl)-6-tert-butyl-4-methylphenol (product name: "ADK STAB LA-36", manufactured by ADEKA Corporation).

The UV absorber may be a dye or a pigment. Examples of the pigment include azo-based, phthalocyanine-based, anthraquinone-based, lake-based, perylene-based, perinone-based, quinacridone-based, thioindigo-based, dioxazine-based, isoindolinone-based, and quinophthalone-based pigments. Examples of the dye include azo-based, phthalocyanine-based, anthraquinone-based, carbonyl-based, indigo-based, quinone imine-based, methine-based, quinoline-based, and nitro-based dyes.

The molecular weight of the compound for forming the UV absorber is preferably 1,000 or less, more preferably 800 or less, still more preferably 600 or less. The lower limit of the molecular weight of the compound for forming the UV absorber is, for example, 100.

The maximum absorption wavelength of the UV absorber is preferably from 300 nm to 450 nm, more preferably from 320 nm to 400 nm, still more preferably from 330 nm to 380 nm.

In at least one embodiment of the present invention, the UV absorber itself may be the UV-absorbing compound in the second pressure-sensitive adhesive layer. In this case, the content of the UV-absorbing compound is preferably from 1 part by weight to 50 parts by weight, more preferably from 2 parts by weight to 30 parts by weight, still more preferably from 3 parts by weight to 25 parts by weight with respect to 100 parts by weight of the base polymer in the second pressure-sensitive adhesive layer. When the content falls within such ranges, there can be obtained such a pressure-sensitive adhesive sheet that when the pressure-sensitive adhesive strength of the entirety of the second pressure-sensitive adhesive layer is satisfactorily reduced by active energy ray irradiation, the curing of the pressure-sensitive adhesive layer satisfactorily progresses, and satisfactory peelability is exhibited by laser light irradiation.

In at least one embodiment of the present invention, the UV-absorbing compound in the second pressure-sensitive adhesive layer may be a form in which the UV absorber is bonded to the base polymer by copolymerization. The UV-absorbing compound in at least one embodiment of the present invention may be obtained by, for example, polymerizing the base polymer with a monomer composition containing a UV-absorbable monomer. That is, the active energy ray-curable pressure-sensitive adhesive B for forming the second pressure-sensitive adhesive layer may contain, as the UV-absorbing compound, a base polymer having the UV-absorbing structure. This form can prevent the migration of the UV-absorbing compound to the first pressure-sensitive adhesive layer. As a result, the UV-absorbing compound is unevenly present in a preferred manner, and hence the effects of the present invention become significant.

For example, a compound (monomer) containing a UV-absorbing group and a polymerizable group is used as the UV absorber that may be bonded to the base polymer by copolymerization. Examples of the UV-absorbing group include a benzotriazole skeleton, a benzophenone skeleton, and a triazine skeleton. In at least one embodiment of the present invention, an acrylic monomer containing the UV-absorbing group and a (meth)acryloyl group is used. Specific examples of the acrylic monomer include 3-(2H-benzotriazol-2-yl)-4-hydroxyphenethyl methacrylate, 2-(4-benzoyl-3-hydroxyphenoxy)ethyl acrylate, and 2-[4-(4,6-diphenyl)-[1,3,5]triazin-2-yl]-3-hydroxy-phenoxy-ethylprop-2-enoate. As a commercially available product thereof, for example, "RUVA-93" (manufactured by Otsuka Chemical Co., Ltd., product name) may be suitably used.

In the form in which the UV absorber is bonded to the base polymer by copolymerization, the content of a constituent unit derived from the UV absorber in the UV-absorbing compound (base polymer) is preferably from 1 part by weight to 50 parts by weight, more preferably from 2 parts by weight to 30 parts by weight, still more preferably from 3 parts by weight to 25 parts by weight with respect to 100 parts by weight of the UV-absorbing compound. When the content falls within such ranges, a pressure-sensitive adhesive sheet excellent in balance between its light transmission characteristic and peelability can be obtained.

### (Cross-linking Agent)

The active energy ray-curable pressure-sensitive adhesive B preferably contains a cross-linking agent. Examples of the cross-linking agent include an isocyanate-based cross-linking agent, an epoxy-based cross-linking agent, an oxazoline-based cross-linking agent, an aziridine-based cross-linking agent, a melamine-based cross-linking agent, a peroxide-based cross-linking agent, a urea-based cross-linking agent, a metal alkoxide-based cross-linking agent, a metal chelate-based cross-linking agent, a metal salt-based cross-linking agent, a carbodiimide-based cross-linking agent, and an amine-based cross-linking agent.

The content of the cross-linking agent is preferably from 0.5 part by weight to 10 parts by weight, more preferably from 1 part by weight to 8 parts by weight with respect to 100 parts by weight of the base polymer of the pressure-sensitive adhesive.

In at least one embodiment of the present invention, an isocyanate-based cross-linking agent is preferably used. The isocyanate-based cross-linking agent is preferred because the agent can react with many kinds of functional groups. Specific examples of the isocyanate-based cross-linking agent include: lower aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic isocyanates, such as 2,4-tolylene diisocyanate, 4,4'-diphenylmethane diisocyanate, and xylylene diisocyanate; and isocyanate adducts, such as a trimethylolpropane/tolylene diisocyanate trimer adduct (manufactured by Nippon Polyurethane Industry Co., Ltd., product name: "CORONATE L"), a trimethylolpropane/hexamethylene diisocyanate trimer adduct (manufactured by Nippon Polyurethane Industry Co., Ltd., product name: "CORONATE HL"), and an isocyanurate form of hexamethylene diisocyanate (manufactured by Nippon Polyurethane Industry Co., Ltd., product name: "CORONATE HX") . Of those, a cross-linking agent having three or more isocyanate groups is preferably used.

In at least one embodiment of the present invention, a cross-linking agent "a" having a functional group that can interact with a functional group of the UV-absorbing compound is used. Such cross-linking agent "a" is, for example, a cross-linking agent having an isocyanate group, a glycidyl group, or an amine group. In addition, examples of the combination of the functional group of the UV-absorbing compound and the functional group of the cross-linking agent "a" include the following combinations: an isocyanate group and a hydroxy group; a glycidyl group and a hydroxyl group; and an amine group and a hydroxyl group.

### (Photopolymerization Initiator)

In at least one embodiment of the present invention, the active energy ray-curable pressure-sensitive adhesive B contains a photopolymerization initiator. Any appropriate initiator may be used as the photopolymerization initiator. Examples of the photopolymerization initiator include: α-ketol-based compounds, such as 4-(2-hydroxyethoxy)phenyl (2-hydroxy-2-propyl)ketone, α-hydroxy-α,α'-dimethylacetophenone, 2-methyl-2-hydroxypropiophenone, and 1-hydroxycyclohexyl phenyl ketone; acetophenone-based compounds, such as methoxyacetophenone, 2,2-dimethoxy-2-phenylacetophenone, 2,2-diethoxyacetophenone, and 2-methyl-1-[4-(methylthio)-phenyl]-2-morpholinopropane-1; benzoin ether-based compounds, such as benzoin ethyl ether, benzoin isopropyl ether, and anisoin methyl ether; ketal-based compounds such as benzyl dimethyl ketal; aromatic sulfonyl chloride-based compounds such as 2-naphthalenesulfonyl chloride; photoactive oxime-based compounds such as 1-phenone-1,1-propanedione-2-(o-ethoxycarbonyl)oxime; benzophenone-based compounds, such as benzophenone, benzoylbenzoic acid, and 3,3'-dimethyl-4-methoxybenzophenone; thioxanthone-based compounds, such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, and 2,4-diisopropylthioxanthone; camphorquinone; halogenated ketones; acylphosphinoxides; and acylphosphonates. The usage amount of the photopolymerization initiator may be set to any appropriate amount.

In at least one embodiment of the present invention, a photopolymerization initiator having two or more (preferably two to five) photodecomposable groups is used as the photopolymerization initiator. The use of such photopolymerization initiator enables the formation of a pressure-sensitive adhesive layer that may have high elasticity by being irradiated with an active energy ray (e.g., UV light). When the second pressure-sensitive adhesive layer can be increased in elastic modulus, the above-mentioned peeling operation can be performed with low-output laser light. The term "photodecomposable group" means a functional group that absorbs an applied active energy ray to generate a radical, and specific examples thereof include a ketone group, a halogenated alkyl group, an ester group, a sulfone group, and a peroxy group.

Examples of the photopolymerization initiator having two or more photodecomposable groups include 2-hydroxy-1-4-[4-(2-hydroxy-2-methyl-propionyl)-benzyl]phenyl-2-methyl-propan-1-one (product name: Omnirad 127, manufactured by BASF Japan Ltd.), 1-[4-(4-benzoylphenylsulfanyl)phenyl]-2-methyl-2-(4-methylphenylsulfonyl)propan-1-one (product name: ESACURE 1001 M), methyl benzoylformate (product name: SpeedCure MBF, manufactured by Lambson Ltd.), O-ethoxyimino-1-phenylpropan-1-one (product name: SpeedCure PDO, manufactured by Lambson Ltd.), and oligo[2-hydroxy-2-methyl-[4-(1-methylvinyl)phenyl]propanone] (product name: ESACURE KIP 150 manufactured by Lamberti) .

In at least one embodiment of the present invention, a compound containing a phosphorus atom and/or a nitrogen atom is used as the photopolymerization initiator. Examples of such photopolymerization initiator include 2-methyl-1-[4-(methylthio)phenyl]-2-morpholinopropan-1-one (product name: Omnirad 907, manufactured by BASF Japan Ltd.), 2-benzyl-2-(dimethylamino)-4'-morpholinobutyrophenone (product name: Omnirad 369, manufactured by BASF Japan Ltd.), 2-dimethylamino-2-(4-methylbenzyl)-1-(4-morpholin-4-yl-phenyl)butan-1-one (product name: Omnirad 379, manufactured by BASF Japan Ltd.), bis(2,4,6-trimethylbenzoyl)phenylphosphine oxide (product name: Omnirad 819, manufactured by BASF Japan Ltd.), 2,4,6-trimethylbenzoyl-diphenylphosphine oxide (product name: Omnirad TPO, manufactured by BASF Japan Ltd.), 1, 2-octanedione-1- [4-(phenylthio)phenyl-2-(O-benzoyloxime)] (product name: Omnirad OXE01, manufactured by BASF Japan Ltd.), and ethanone-1-[9-ethyl-6-(2-methylbenzoyl)-9H-carbazol-3-yl]-1-(O-acetyloxime) (product name: Omnirad OXE02, manufactured by BASF Japan Ltd.). The use of such photopolymerization initiator enables the formation of a pressure-sensitive adhesive layer that may have high elasticity by being irradiated with an active energy ray (e.g., UV light). When the second pressure-sensitive adhesive layer can be increased in elastic modulus, the above-mentioned peeling operation can be performed with low-output laser light.

The content of the photopolymerization initiator is preferably from 1 part by weight to 30 parts by weight, more preferably from 2 parts by weight to 20 parts by weight, still more preferably from 3 parts by weight to 15 parts by weight with respect to 100 parts by weight of the base polymer in the second pressure-sensitive adhesive layer. When the content falls within such ranges, there can be obtained such a pressure-sensitive adhesive sheet that when the pressure-sensitive adhesive strength of the entirety of its second pressure-sensitive adhesive layer is satisfactorily reduced by active energy ray irradiation, the curing of the second pressure-sensitive adhesive layer satisfactorily progresses, the strain amount of the second pressure-sensitive adhesive layer by laser light irradiation is large, and satisfactory peelability is exhibited.

### (Photosensitizer)

In at least one embodiment of the present invention, the active energy ray-curable pressure-sensitive adhesive B may contain a photosensitizer.

In at least one embodiment of the present invention, the photosensitizer may be used in combination with the photopolymerization initiator. The photosensitizer can generate a radical from the photopolymerization initiator by transferring, to the photopolymerization initiator, energy obtained by the absorption of light by the photosensitizer itself, and hence can advance the polymerization of the pressure-sensitive adhesive layer with light having a long wavelength at which no absorption peak of the photopolymerization initiator itself is present. Accordingly, the incorporation of the photosensitizer can enlarge a difference between the absorption wavelength of the UV-absorbing compound and the wavelength at which the radical can be generated from the photopolymerization initiator. As a result, the photopolymerization of the second pressure-sensitive adhesive layer and the peeling thereof by laser light irradiation can be performed without affecting each other. In at least one embodiment of the present invention, 2,2-dimethoxy-1,2-diphenylethan-1-one (e.g., a product available under the product name "IRGACURE 651" from BASF) serving as the photopolymerization initiator and the photosensitizer are used in combination. Examples of such photosensitizer include a product available under the product name "UVS-581" from Kawasaki Kasei Chemicals Ltd. and 9,10-diethoxyanthracene (e.g., a product available under the product name "UVS-1101" from Kawasaki Kasei Chemicals Ltd.).

Other examples of the photosensitizer include 9,10-dibutoxyanthracene (e.g., a product available under the product name "UVS-1331" from Kawasaki Kasei Chemicals Ltd.), 2-isopropylthioxanthone, benzophenone, a thioxanthone derivative, and 4,4'-bis(dimethylamino)benzophenone. Examples of the thioxanthone derivative include ethoxycarbonylthioxanthone and isopropylthioxanthone.

The content of the photosensitizer is preferably from 0.01 part by weight to 2 parts by weight, more preferably from 0.5 part by weight to 2 parts by weight with respect to 100 parts by weight of the base polymer.

The active energy ray-curable pressure-sensitive adhesive may further contain any appropriate additive as required. Examples of the additive include an active energy ray polymerization accelerator, a radical scavenger, a tackifier, a plasticizer (e.g., a trimellitate-based plasticizer or a pyromellitate-based plasticizer), a pigment, a dye, a filler, an age resistor, a conductive material, an antistatic agent, a light stabilizer, a peeling modifier, a softener, a surfactant, a flame retardant, and an antioxidant.

### (Characteristics of Second Pressure-sensitive Adhesive Layer)

The thickness of the second pressure-sensitive adhesive layer is preferably 20 um or less. When the thickness falls within such range, there can be obtained a pressure-sensitive adhesive sheet that can further reduce a laser output at the time of the peeling of an adherend, and hence excellently expresses its peelability. The thickness of the pressure-sensitive adhesive layer is more preferably 15 µm or less, still more preferably 10 um or less, still more preferably from 1 µm to 10 µm. When the thickness falls within such ranges, the above-mentioned effect becomes significant.

The initial indentation elastic modulus of the second pressure-sensitive adhesive layer at 23°C is preferably 4 MPa or less, more preferably 3 MPa or less, still more preferably 2 MPa or less. When the second pressure-sensitive adhesive layer has an indentation elastic modulus in such ranges, at the time of the bonding of an electronic part thereto, a state in which part of the electronic part is preferably embedded in the second pressure-sensitive adhesive layer can be established, and hence the electronic part can be temporarily fixed with satisfactory fixability. In addition, the initial indentation elastic modulus of the second pressure-sensitive adhesive layer at 23°C is preferably 0.1 MPa or more, more preferably 0.2 MPa or more, still more preferably 0.3 MPa or more, particularly preferably 0.7 MPa or more. When the initial indentation elastic modulus falls within such ranges, there can be obtained a pressure-sensitive adhesive sheet that hardly contaminates an adherend and is excellent in peelability. The term "initial indentation elastic modulus" means an indentation elastic modulus before irradiation with an active energy ray and laser light.

The second pressure-sensitive adhesive layer is preferably a layer that has an indentation elastic modulus of 150 MPa or more at 23°C after being irradiated with UV light having an integrated light quantity of 460 mJ/cm², and the indentation elastic modulus is more preferably 200 MPa or more, particularly preferably 250 MPa or more. When the pressure-sensitive adhesive sheet includes the second pressure-sensitive adhesive layer that may have such indentation elastic modulus after being irradiated with the UV light, the irradiation of the second pressure-sensitive adhesive layer with low-energy laser light causes strain in the layer, and as a result, enables satisfactory peeling of its adherend (electronic part). In addition, the contamination of the electronic part at the time of the peeling can be prevented. The upper limit of the indentation elastic modulus of the second pressure-sensitive adhesive layer after the irradiation with the UV light having an integrated light quantity of 460 mJ/cm² is, for example, 8,000 MPa (preferably 5,000 MPa, more preferably 4,000 MPa).

### C. Base Material

The base material may include any appropriate resin. Examples of the resin include a polyolefin-based resin, such as a polyethylene-based resin, a polypropylene-based resin, a polybutene-based resin, or a polymethylpentene-based resin, a polyurethane-based resin, a polyester-based resin, a polyimide-based resin, a polyetherketone-based resin, a polystyrene-based resin, a polyvinyl chloride-based resin, a polyvinylidene chloride-based resin, a fluorine-based resin, a silicon-based resin, a cellulose-based resin, and an ionomer resin. Of those, a polyolefin-based resin is preferred.

The thickness of the base material is preferably from 2 µm to 300 µm, more preferably from 2 µm to 100 µm, still more preferably from 2 µm to 50 µm.

The transmittance of the base material for light having a wavelength of 355 nm is preferably 70% or more, more preferably 80% or more, still more preferably 90% or more, particularly preferably 95% or more. The upper limit of the total light transmittance of the base material is, for example, 98% (preferably 99%).

### D. Method of producing Pressure-sensitive Adhesive Sheet

The pressure-sensitive adhesive sheet may be produced by any appropriate method. The pressure-sensitive adhesive sheet may be obtained by, for example, applying the pressure-sensitive adhesive onto the base material or the release liner. Various methods, such as bar coater coating, air knife coating, gravure coating, gravure reverse coating, reverse roll coating, lip coating, die coating, dip coating, offset printing, flexographic printing, and screen printing, may each be adopted as a method for the application. In addition, for example, a method involving separately forming the pressure-sensitive adhesive layer on a release liner and then bonding the resultant to the base material may be adopted.

### E. Method of transporting Electronic Part

In at least one embodiment of the present invention, there is provided a method of transporting an electronic part with the above-mentioned pressure-sensitive adhesive sheet. The transportation method includes, for example, a first step of transferring a plurality of electronic parts arrayed on a substrate onto the pressure-sensitive adhesive laminate (second pressure-sensitive adhesive layer) of the pressure-sensitive adhesive sheet, and a second step of transferring the electronic parts on the pressure-sensitive adhesive sheet onto another member. The same pressure-sensitive adhesive sheet is preferably used in the first step and the second step. That is, in the transportation method, the transportation of the electronic parts may be performed without any further transferring step.

In the first step, the transfer of the electronic parts from the substrate to the pressure-sensitive adhesive sheet may be performed by a process including irradiating an interface portion between the substrate and the electronic parts with laser light, that is, a laser liftoff process. Various conditions for the laser liftoff process may be set to any appropriate conditions.

A hard substrate such as a sapphire substrate may be used as the substrate.

In at least one embodiment of the present invention, the second step includes the following operations. That is, the second step includes: (i) applying an active energy ray (e.g., UV light) to the pressure-sensitive adhesive sheet to reduce the pressure-sensitive adhesive strength of the pressure-sensitive adhesive laminate of the pressure-sensitive adhesive sheet; and (ii) applying laser light to a site where the expression of peelability is desired to cause strain in the second pressure-sensitive adhesive layer, to thereby further reduce the pressure-sensitive adhesive strength. According to the method, the electronic parts can be peeled only at the site irradiated with the laser light. When the pressure-sensitive adhesive sheet according to at least one embodiment of the present invention is used, the pressure-sensitive adhesive strength can be reduced to such an extent that an adherend freely falls, and hence even extremely small (e.g., 50-micrometer square) electronic parts can be peeled one by one separately.

The active energy ray in the above-mentioned operation (i) may be applied to the entire surface of the pressure-sensitive adhesive laminate. In at least one embodiment of the present invention, UV light having an integrated light quantity of from 200 mJ/cm² to 600 mJ/cm² is applied.

For example, laser light having a wavelength of from 200 nm to 360 nm (preferably 355 nm) is used as the laser light in the above-mentioned operation (ii). The output of the laser light is, for example, from 100 mJ/cm² to 1,200 mJ/cm².

In at least one embodiment of the present invention, the electronic parts are each a mini LED or a micro LED.

### Examples

Now, the present invention is specifically described by way of Examples. However, the present invention is by no means limited to these Examples. Test and evaluation methods in Examples are as described below. In addition, the terms "part(s)" and "%" are by weight unless otherwise stated.

### (1) Amount of UV-absorbing Structure

In each of Examples and Comparative Examples, a calibration curve by FT-IR (ATR method) on a UV-absorbing structure was obtained by using the group of other pressure-sensitive adhesive layer samples formed by the same method except for the addition amount of a UV absorber. Specifically, the plurality of other pressure-sensitive adhesive layer samples different from each other in addition amount of the UV absorber were subjected to FT-IR measurement. A peak intensity at an absorption wavenumber derived from a base polymer (acrylic polymer) for forming each of the other pressure-sensitive adhesive layer samples was adopted as a reference, and an (amount of UV-absorbing structure) versus (peak intensity of UV-absorbing structure) calibration curve was obtained on the basis of a ratio between the peak intensity and a peak intensity at an absorption wavenumber derived from the UV-absorbing structure (UV absorber).

After that, the FT-IR (ATR method) measurement of first and second pressure-sensitive adhesive layers formed in each of Examples and Comparative Examples was performed to provide a peak intensity at an absorption wavenumber derived from the UV-absorbing structure, and the amount of the UV-absorbing structure in each of the pressure-sensitive adhesive layers was identified from the above-mentioned calibration curve. The ratio of the UV-absorbing structure (amount of UV-absorbing structure in outer surface of first pressure-sensitive adhesive layer/amount of UV-absorbing structure in outer surface of second pressure-sensitive adhesive layer) was determined from the amounts of the UV-absorbing structure in the pressure-sensitive adhesive layers.

The peak intensity at the absorption wavenumber derived from the UV-absorbing structure (UV absorber) was defined as the intensity of a peak at each of the following absorption wavenumbers:
Example 1: 1,594 cm⁻¹;
Example 2: 1,379 cm⁻¹;
Example 3 and Comparative Example 2: 1,509 cm⁻¹; and
Examples 4 to 13, and Comparative Examples 3 and 4: 752 cm⁻¹.

In addition, the peak intensity of the acrylic polymer was defined as the intensity of a peak at from 1,725 cm⁻¹ to 1,730 cm⁻¹.

In the FT-IR (ATR method) measurement, the pressure-sensitive adhesive layer in the range of from an outer surface (surface opposite to an interface between the first pressure-sensitive adhesive layer and the second pressure-sensitive adhesive layer) to a depth of 1 µm was adopted as a measurement sample.

### (2) Transmittance for Light having Wavelength of 355 nm

A PET release liner on one surface of a pressure-sensitive adhesive sheet was peeled, and the sheet was bonded to a large slide glass (manufactured by Matsunami Glass Ind., Ltd., product name: "S9111") with a hand roller, followed by measurement under a state in which a PET release liner on the other surface was peeled. Specifically, the transmittance of the pressure-sensitive adhesive sheet on the large slide glass for light having a wavelength of 355 nm was measured with a spectrophotometer (product name: "SPECTROPHOTOMETER U-4100", manufactured by Hitachi High-Tech Science Corporation).

### (3-1) Indentation Elastic Modulus (First Pressure-sensitive Adhesive Layer/before UV Irradiation)

A PET release liner on the second pressure-sensitive adhesive layer side of the pressure-sensitive adhesive sheet was peeled, and the second pressure-sensitive adhesive layer was bonded to a large slide glass (manufactured by Matsunami Glass Ind., Ltd., product name: "S9111") with a hand roller. Next, a PET release liner on the first pressure-sensitive adhesive layer side of the resultant was peeled to expose the first pressure-sensitive adhesive layer, and its indentation elastic modulus was measured with TriboIndenter TI-950 manufactured by Hysitron. The measurement was performed at an indentation speed of 10 nm/s and an indentation depth of 100 nm by a single indentation method at 23°C.

### (3-2) Indentation Elastic Modulus (First Pressure-sensitive Adhesive Layer/after UV Irradiation)

The PET release liner on the second pressure-sensitive adhesive layer side of the pressure-sensitive adhesive sheet was peeled, and the second pressure-sensitive adhesive layer was bonded to a large slide glass (manufactured by Matsunami Glass Ind., Ltd., product name: "S9111") with a hand roller. UV light (specific wavelength: 365 nm, integrated light quantity: 460 mJ/cm²) from the high-pressure mercury lamp of a UV irradiation apparatus (manufactured by Nitto Seiki Co., Ltd., product name: "UM-810") was applied from the first pressure-sensitive adhesive layer side of the resultant to the entire surface thereof. After that, the PET release liner on the first pressure-sensitive adhesive layer side was peeled to expose the first pressure-sensitive adhesive layer, and its indentation elastic modulus was measured with TriboIndenter TI-950 manufactured by Hysitron under the same conditions as those of the above-mentioned section (3-1) .

### (3-3) Indentation Elastic Modulus (Second Pressure-sensitive Adhesive Layer/before UV Irradiation)

The PET release liner on the first pressure-sensitive adhesive layer side of the pressure-sensitive adhesive sheet was peeled, and the first pressure-sensitive adhesive layer was bonded to a large slide glass (manufactured by Matsunami Glass Ind., Ltd., product name: "S9111") with a hand roller. Next, the PET release liner on the second pressure-sensitive adhesive layer side of the resultant was peeled to expose the second pressure-sensitive adhesive layer, and its indentation elastic modulus was measured with TriboIndenter TI-950 manufactured by Hysitron under the same conditions as those of the above-mentioned section (3-1).

### (3-4) Indentation Elastic Modulus (Seocnd Pressure-sensitive Adhesive Layer/after UV Irradiation)

The PET release liner on the first pressure-sensitive adhesive layer side of the pressure-sensitive adhesive sheet was peeled, and the first pressure-sensitive adhesive layer was bonded to a large slide glass (manufactured by Matsunami Glass Ind., Ltd., product name: "S9111") with a hand roller. UV light (specific wavelength: 365 nm, integrated light quantity: 460 mJ/cm²) from the high-pressure mercury lamp of a UV irradiation apparatus (manufactured by Nitto Seiki Co., Ltd., product name: "UM-810") was applied from the second pressure-sensitive adhesive layer side of the resultant to the entire surface thereof. After that, the PET release liner on the second pressure-sensitive adhesive layer side was peeled to expose the second pressure-sensitive adhesive layer, and its indentation elastic modulus was measured with TriboIndenter TI-950 manufactured by Hysitron under the same conditions as those of the above-mentioned section (3-1).

### (4) Laser Liftoff (LLO) Evaluation

The first pressure-sensitive adhesive layer was bonded onto a 4-inch square quartz glass, and then a sapphire substrate was bonded to the resultant so that its LED chips were on the second pressure-sensitive adhesive layer. The bonding was performed with a protective tape-bonding apparatus with a vacuum and press mechanism (product name: "DV 3000", manufactured by Nitto Seiki Co., Ltd.) under the conditions of a vacuum time of 90 seconds, a pressure bonding condition of 0.25 MPa, and a pressure bonding time of 0 seconds.

After the completion of the pressure bonding, laser light (from an excimer laser manufactured by MLase AG) was applied from the sapphire surface of the resultant to perform LLO. The LLO was performed under the conditions of a wavelength of 248 nm and an energy density of 900 mJ/cm³. After the LLO, the sapphire glass was removed, and the yield in which the LED chips were transferred onto the second pressure-sensitive adhesive layer was recognized. A yield of 90% or more was regarded as being satisfactory (o), a yield of 80% or more and less than 90% was regarded as being acceptable (Δ), and a yield of less than 80% was regarded as being unacceptable (×).

### (5) Laser Transfer Evaluation

After the LLO, UV light was applied from the quartz glass surface side of the resultant sample with a UV irradiation apparatus (product name: "UM-810", manufactured by Nitto Seiki Co., Ltd.) under a nitrogen atmosphere to photocure the pressure-sensitive adhesive layers. The curing was performed with UV light from the high-pressure mercury lamp of the apparatus under the conditions of a wavelength of 365 nm and an integrated light quantity of 460 mJ/cm² in terms of the wavelength.

After that, laser light (wavelength: 355 nm, pulse width: 5 ns) was applied from the quartz glass side only to a target chip position to perform laser transfer. The laser light was applied while its irradiation energy was set to each of the following three conditions: 400 mJ/cm², 600 mJ/cm², and 800 mJ/cm². A case in which the LED chip was transferred onto another member was indicated by Symbol "∘", and a case in which the chip was not transferred thereonto was indicated by Symbol "×". The chip and the pressure-sensitive adhesive sheet after the transfer were observed with a digital microscope (product name: "VHX-2000", manufactured by Keyence Corporation). A case in which the adhesion of debris to the vicinity of the chip or the decomposition of the pressure-sensitive adhesive sheet was observed was indicated by Symbol "×" in the column "Debris" of Table 1, and a case in which none of the adhesion and the decomposition was observed was indicated by Symbol "∘" in the column "Debris".

### [Production Example 1] Preparation of Acrylic Polymer A

100 Parts by weight of 2-methoxyethyl acrylate, 27 parts by weight of acryloylmorpholine, and 22 parts by weight of 2-hydroxyethyl acrylate were mixed to prepare a monomer composition.

Next, nitrogen was introduced into a reaction vessel including a nitrogen inlet tube, a temperature gauge, and a stirring machine, and under a nitrogen atmosphere, 500 parts by weight of toluene, 149 parts by weight of the monomer composition, and 0.3 part by weight of benzoyl peroxide (BPO) were loaded into the vessel, followed by stirring at 60°C for 5 hours. After that, the resultant copolymer was cooled to room temperature, and 24 parts by weight of 2-methacryloyloxyethyl isocyanate was added to, and caused to react with, the copolymer to add an NCO group to a terminal OH group in a 2-hydroxyethyl acrylate side chain in the copolymer. Thus, an acrylic polymer solution A containing an acrylic polymer A having a carbon-carbon double bond at a terminal thereof was obtained.

### [Production Example 2] Preparation of Acrylic Polymer B

100 Parts by weight of isononyl acrylate and 32 parts by weight of 2-hydroxyethyl acrylate were mixed to prepare a monomer composition.

Next, nitrogen was introduced into a reaction vessel including a nitrogen inlet tube, a temperature gauge, and a stirring machine, and under a nitrogen atmosphere, 280 parts by weight of ethyl acetate, 132 parts by weight of the monomer composition, and 0.3 part by weight of benzoyl peroxide (BPO) were loaded into the vessel, followed by stirring at 60°C for 4 hours. After that, the resultant copolymer was cooled to room temperature, and 56 parts by weight of 2-methacryloyloxyethyl isocyanate was added to, and caused to react with, the copolymer to add an NCO group to a terminal OH group in a 2-hydroxyethyl acrylate side chain in the copolymer. Thus, an acrylic polymer solution B containing an acrylic polymer B having a carbon-carbon double bond at a terminal thereof was obtained.

### [Production Example 3] Preparation of Acrylic Polymer C

100 Parts by weight of 2-ethylhexyl acrylate, 25.5 parts by weight of acryloylmorpholine, and 18.5 parts by weight of 2-hydroxyethyl acrylate were mixed to prepare a monomer composition.

Next, nitrogen was introduced into a reaction vessel including a nitrogen inlet tube, a temperature gauge, and a stirring machine, and under a nitrogen atmosphere, 60 parts by weight of toluene, 144 parts by weight of the monomer composition, and 0.3 part by weight of benzoyl peroxide (BPO) were loaded into the vessel, followed by stirring at 60°C for 4 hours. After that, the resultant copolymer was cooled to room temperature, and 22.5 parts by weight of 2-methacryloyloxyethyl isocyanate was added to, and caused to react with, the copolymer to add an NCO group to a terminal OH group in a 2-hydroxyethyl acrylate side chain in the copolymer. Thus, an acrylic polymer solution C containing an acrylic polymer C having a carbon-carbon double bond at a terminal thereof was obtained.

### [Production Example 4] Preparation of Acrylic Polymer D

70 Parts by weight of ethyl acrylate, 30 parts by weight of 2-hydroxyethyl acrylate, and 5 parts by weight of methacrylic acid methyl acrylate were mixed to prepare a monomer composition.

Next, nitrogen was introduced into a reaction vessel including a nitrogen inlet tube, a temperature gauge, and a stirring machine, and under a nitrogen atmosphere, 295 parts by weight of ethyl acetate, 109 parts by weight of the monomer composition, and 0.2 part by weight of benzoyl peroxide (BPO) were loaded into the vessel, followed by stirring at 60°C for 4 hours to provide an acrylic polymer solution D containing an acrylic polymer D.

### [Production Example 5] Preparation of Acrylic Polymer E

106 Parts by weight of 2-methoxyethyl acrylate, 22 parts by weight of acryloylmorpholine, 24 parts by weight of 2-hydroxyethyl acrylate, and 16.5 parts by weight of a UV absorber (manufactured by Otsuka Chemical Co., Ltd., product name: "RUVA-93") were mixed to prepare a monomer composition.

Next, nitrogen was introduced into a reaction vessel including a nitrogen inlet tube, a temperature gauge, and a stirring machine, and under a nitrogen atmosphere, 430 parts by weight of ethyl acetate, 168.5 parts by weight of the monomer composition, and 0.35 part by weight of AIBN were loaded into the vessel, followed by stirring at 63°C for 5 hours. After that, the resultant copolymer was cooled to room temperature, and 28 parts by weight of 2-methacryloyloxyethyl isocyanate was added to, and caused to react with, the copolymer to add an NCO group to a terminal OH group in a 2-hydroxyethyl acrylate side chain in the copolymer. Thus, an acrylic polymer solution E containing an acrylic polymer E having a carbon-carbon double bond at a terminal thereof and having a UV-absorbing structure was obtained.

### [Production Example 6] Preparation of Acrylic Polymer F

106 Parts by weight of 2-methoxyethyl acrylate, 27 parts by weight of acryloylmorpholine, 40 parts by weight of 2-hydroxyethyl acrylate, and 18.5 parts by weight of a UV absorber (manufactured by Otsuka Chemical Co., Ltd., product name: "RUVA-93") were mixed to prepare a monomer composition.

Next, nitrogen was introduced into a reaction vessel including a nitrogen inlet tube, a temperature gauge, and a stirring machine, and under a nitrogen atmosphere, 400 parts by weight of ethyl acetate, 191.5 parts by weight of the monomer composition, and 0.4 part by weight of AIBN were loaded into the vessel, followed by stirring at 63°C for 5 hours. After that, the resultant copolymer was cooled to room temperature, and 43 parts by weight of 2-methacryloyloxyethyl isocyanate was added to, and caused to react with, the copolymer to add an NCO group to a terminal OH group in a 2-hydroxyethyl acrylate side chain in the copolymer. Thus, an acrylic polymer solution F containing an acrylic polymer F having a carbon-carbon double bond at a terminal thereof and having bonded thereto the UV absorber was obtained.

### [Production Example 7] Preparation of Acrylic Polymer G

65 Parts by weight of isononyl acrylate, 25 parts by weight of 2-hydroxyethyl acrylate, and 5 parts by weight of a UV absorber (manufactured by Otsuka Chemical Co., Ltd., product name: "RUVA-93") were mixed to prepare a monomer composition.

Next, nitrogen was introduced into a reaction vessel including a nitrogen inlet tube, a temperature gauge, and a stirring machine, and under a nitrogen atmosphere, 200 parts by weight of ethyl acetate, 95 parts by weight of the monomer composition, and 0.2 part by weight of AIBN were loaded into the vessel, followed by stirring at 63°C for 5 hours. After that, the resultant copolymer was cooled to room temperature, and 31 parts by weight of 2-methacryloyloxyethyl isocyanate was added to, and caused to react with, the copolymer to add an NCO group to a terminal OH group in a 2-hydroxyethyl acrylate side chain in the copolymer. Thus, an acrylic polymer solution G containing an acrylic polymer G having a carbon-carbon double bond at a terminal thereof and having bonded thereto the UV absorber was obtained.

### [Production Example 8] Preparation of Acrylic Polymer H

113 Parts by weight of isononyl acrylate, 44 parts by weight of 2-hydroxyethyl acrylate, and 17.5 parts by weight of a UV absorber (manufactured by Otsuka Chemical Co., Ltd., product name: "RUVA-93") were mixed to prepare a monomer composition.

Next, nitrogen was introduced into a reaction vessel including a nitrogen inlet tube, a temperature gauge, and a stirring machine, and under a nitrogen atmosphere, 320 parts by weight of ethyl acetate, 174.5 parts by weight of the monomer composition, and 0.35 part by weight of AIBN were loaded into the vessel, followed by stirring at 63°C for 5 hours. After that, the resultant copolymer was cooled to room temperature, and 60 parts by weight of 2-methacryloyloxyethyl isocyanate was added to, and caused to react with, the copolymer to add an NCO group to a terminal OH group in a 2-hydroxyethyl acrylate side chain in the copolymer. Thus, an acrylic polymer solution H containing an acrylic polymer H having a carbon-carbon double bond at a terminal thereof and having bonded thereto the UV absorber was obtained.

### [Example 1]

### (Preparation of Pressure-sensitive Adhesive (1a))

3 Parts by weight (solid content) of a cross-linking agent (manufactured by Mitsui Chemicals, Inc., product name: "TAKENATE D-101A") and 7 parts by weight of a photopolymerization initiator (manufactured by BASF, product name: "Omnirad 127D") were added to the acrylic polymer solution A containing 100 parts by weight of the acrylic polymer A (solid content) to provide a pressure-sensitive adhesive (1a).

### (Preparation of Pressure-sensitive Adhesive (2a))

1 Part by weight (solid content) of a cross-linking agent (manufactured by Mitsui Chemicals, Inc., product name: "TAKENATE D-101A"), 10 parts by weight of a UV absorber (manufactured by BASF, product name: "Tinuvin 928", 2-(2H-benzotriazol-2-yl)-6-(1-methyl-1-phenylethyl)-4-(1,1,3,3-tetramethylbutyl)phenol), and 7 parts by weight of a photopolymerization initiator (manufactured by BASF, product name: "Omnirad 127D") were added to the acrylic polymer solution B containing 100 parts by weight of the acrylic polymer B (solid content) to provide a pressure-sensitive adhesive (2a).

### (Pressure-sensitive Adhesive Sheet)

The pressure-sensitive adhesive (1a) was applied to the silicone-treated surface of a PET release liner (thickness: 38 µm), and was then heated at 130°C for 2 minutes to form a first pressure-sensitive adhesive layer having a thickness of 4 µm.

The pressure-sensitive adhesive (2a) was separately applied to the silicone-treated surface of another PET release liner (thickness: 38 µm), and was then heated at 130°C for 2 minutes to form a second pressure-sensitive adhesive layer having a thickness of 1 µm.

The first pressure-sensitive adhesive layer and the second pressure-sensitive adhesive layer described above were bonded to each other to provide a pressure-sensitive adhesive sheet with release liners (release liner/first pressure-sensitive adhesive layer/second pressure-sensitive adhesive layer/release liner).

The resultant pressure-sensitive adhesive sheet with release liners was subjected to the above-mentioned evaluations. The results are shown in Table 1.

### [Example 2]

A pressure-sensitive adhesive sheet with release liners was obtained in the same manner as in Example 1 except that 10 parts by weight of a UV absorber (manufactured by BASF, product name: "Tinuvin 477") was used instead of 10 parts by weight of the UV absorber (manufactured by BASF, product name: "Tinuvin 928"). The resultant pressure-sensitive adhesive sheet with release liners was subjected to the above-mentioned evaluations. The results are shown in Table 1.

### [Example 3]

### (Preparation of Pressure-sensitive Adhesive (1b))

1 Part by weight (solid content) of a cross-linking agent (manufactured by Mitsui Chemicals, Inc., product name: "TAKENATE D-101A") and 7 parts by weight of a photopolymerization initiator (manufactured by BASF, product name: "Omnirad 127D") were added to the acrylic polymer solution B containing 100 parts by weight of the acrylic polymer B (solid content) to provide a pressure-sensitive adhesive (1b).

### (Preparation of Pressure-sensitive Adhesive (2b))

3 Parts by weight (solid content) of a cross-linking agent (manufactured by Tosoh Corporation, product name: "CORONATE/HX"), 10 parts by weight of a UV absorber (manufactured by BASF, product name: "Tinuvin 405", a reaction product of 2-(2,4-dihydroxyphenyl)-4,6-bis-(2,4-dimethylphenyl)-1,3,5-triazine and (2-ethylhexyl)-glycidic acid ester), and 7 parts by weight of a photopolymerization initiator (manufactured by BASF, product name: "Omnirad 127D") were added to the acrylic polymer solution B containing 100 parts by weight of the acrylic polymer B (solid content) to provide a pressure-sensitive adhesive (2b). The cross-linking agent (manufactured by Tosoh Corporation, product name: "CORONATE/HX") is a cross-linking agent that can react with a OH group of the UV absorber.

### (Pressure-sensitive Adhesive Sheet)

The pressure-sensitive adhesive (1b) was applied to the silicone-treated surface of a PET release liner (thickness: 38 µm), and was then heated at 130°C for 2 minutes to form a first pressure-sensitive adhesive layer having a thickness of 4 µm.

The pressure-sensitive adhesive (2b) was separately applied to the silicone-treated surface of another PET release liner (thickness: 38 µm), and was then heated at 130°C for 2 minutes to form a second pressure-sensitive adhesive layer having a thickness of 1 µm.

The first pressure-sensitive adhesive layer and the second pressure-sensitive adhesive layer described above were bonded to each other to provide a pressure-sensitive adhesive sheet with release liners (release liner/first pressure-sensitive adhesive layer/second pressure-sensitive adhesive layer/release liner).

The resultant pressure-sensitive adhesive sheet with release liners was subjected to the above-mentioned evaluations. The results are shown in Table 1.

### [Example 4]

### (Preparation of Pressure-sensitive Adhesive (1c))

3 Parts by weight (solid content) of a cross-linking agent (manufactured by Mitsui Chemicals, Inc., product name: "TAKENATE D-101A") and 7 parts by weight of a photopolymerization initiator (manufactured by BASF, product name: "Omnirad 127D") were added to the acrylic polymer solution A containing 100 parts by weight of the acrylic polymer A (solid content) to provide a pressure-sensitive adhesive (1c).

### (Preparation of Pressure-sensitive Adhesive (2c))

1 Part by weight (solid content) of a cross-linking agent (manufactured by Mitsui Chemicals, Inc., product name: "TAKENATE D-101A") and 7 parts by weight of a photopolymerization initiator (manufactured by BASF, product name: "Omnirad 127D") were added to the acrylic polymer solution E containing 100 parts by weight of the acrylic polymer E (solid content) to provide a pressure-sensitive adhesive (2c).

### (Pressure-sensitive Adhesive Sheet)

The pressure-sensitive adhesive (1c) was applied to the silicone-treated surface of a PET release liner (thickness: 38 µm), and was then heated at 130°C for 2 minutes to form a first pressure-sensitive adhesive layer having a thickness of 8 µm.

The pressure-sensitive adhesive (2b) was separately applied to the silicone-treated surface of another PET release liner (thickness: 38 µm), and was then heated at 130°C for 2 minutes to form a second pressure-sensitive adhesive layer having a thickness of 2 µm.

The first pressure-sensitive adhesive layer and the second pressure-sensitive adhesive layer described above were bonded to each other to provide a pressure-sensitive adhesive sheet with release liners (release liner/first pressure-sensitive adhesive layer/second pressure-sensitive adhesive layer/release liner).

The resultant pressure-sensitive adhesive sheet with release liners was subjected to the above-mentioned evaluations. The results are shown in Table 1.

### [Examples 5 to 13]

Pressure-sensitive adhesive sheets were each obtained in the same manner as in Example 4 except that the acrylic polymer solution, the cross-linking agent, and the photopolymerization initiator shown in Table 1 were used in blending amounts (solid content blending amounts) shown in Table 1. The resultant pressure-sensitive adhesive sheets were subjected to the above-mentioned evaluations. The results are shown in Table 1.

The compounds and the like used in Examples and Comparative Examples are as described below.

### (Cross-linking Agent)

·D-101A: isocyanate-based cross-linking agent, manufactured by Mitsui Chemicals, Inc., product name: "TAKENATE D-101A"
·CORONATE HX: isocyanate-based cross-linking agent, manufactured by Tosoh Corporation, product name: "CORONATE/HX"

### (Photopolymerization Initiator)

·Omni 127D: manufactured by BASF, product name: "Omnirad 127D", compound name: 2-hydroxy-1-(4-(4-(2-hydroxy-2-methylpropionyl)benzyl)phenyl)-2-methylpropan-1-one
·Omni TPO: manufactured by BASF, product name: "Omnirad TPO", compound name: 2,4,6-trimethylbenzoyl-diphenyl phosphine oxide

### [Comparative Example 1]

### (Preparation of Pressure-sensitive Adhesive (1a))

The pressure-sensitive adhesive (1a) was obtained in the same manner as in Example 1.

### (Pressure-sensitive Adhesive Sheet)

The pressure-sensitive adhesive (1a) was applied to the silicone-treated surface of a PET release liner (thickness: 38 µm), and was then heated at 130°C for 2 minutes to form a first pressure-sensitive adhesive layer having a thickness of 10 µm.

Another release liner was bonded to the first pressure-sensitive adhesive layer to provide a pressure-sensitive adhesive sheet with release liners (release liner/first pressure-sensitive adhesive layer/release liner).

The resultant pressure-sensitive adhesive sheet with release liners was subjected to the above-mentioned evaluations. The results are shown in Table 1.

### [Comparative Example 2]

### (Preparation of Pressure-sensitive Adhesive (2c))

3 Parts by weight (solid content) of a cross-linking agent (manufactured by Mitsui Chemicals, Inc., product name: "TAKENATE D-101A"), 5 parts by weight of a UV absorber (manufactured by BASF, product name: "Tinuvin 405", and 7 parts by weight of a photopolymerization initiator (manufactured by BASF, product name: "Omnirad 127D") were added to the acrylic polymer solution A containing 100 parts by weight of the acrylic polymer A (solid content) to provide a pressure-sensitive adhesive (2c).

### (Pressure-sensitive Adhesive Sheet)

The pressure-sensitive adhesive (1c) was applied to the silicone-treated surface of a PET release liner (thickness: 38 µm), and was then heated at 130°C for 2 minutes to form a second pressure-sensitive adhesive layer having a thickness of 10 µm.

Another release liner was bonded to the second pressure-sensitive adhesive layer to provide a pressure-sensitive adhesive sheet with release liners (release liner/second pressure-sensitive adhesive layer/release liner).

The resultant pressure-sensitive adhesive sheet with release liners was subjected to the above-mentioned evaluations. The results are shown in Table 1.

### [Comparative Example 3]

### (Preparation of Pressure-sensitive Adhesive (1d))

4 Parts by weight (solid content) of a cross-linking agent (manufactured by Mitsui Chemicals, Inc., product name: "TAKENATE D-101A") was added to the acrylic polymer solution D containing 100 parts by weight of the acrylic polymer D (solid content) to provide a pressure-sensitive adhesive (1d).

### (Preparation of Pressure-sensitive Adhesive (2d))

1 Part by weight (solid content) of a cross-linking agent (manufactured by Mitsui Chemicals, Inc., product name: "TAKENATE D-101A") and 7 parts by weight of a photopolymerization initiator (manufactured by BASF, product name: "Omnirad 127D") were added to the acrylic polymer solution H containing 100 parts by weight of the acrylic polymer H (solid content) to provide a pressure-sensitive adhesive (2d).

### (Pressure-sensitive Adhesive Sheet)

The pressure-sensitive adhesive (1d) was applied to the silicone-treated surface of a PET release liner (thickness: 38 µm), and was then heated at 130°C for 2 minutes to form a pressure-sensitive adhesive layer "a" having a thickness of 8 µm.

The pressure-sensitive adhesive (2d) was separately applied to the silicone-treated surface of another PET release liner (thickness: 38 µm), and was then heated at 130°C for 2 minutes to form a second pressure-sensitive adhesive layer having a thickness of 2 um.

The pressure-sensitive adhesive layer "a" and the second pressure-sensitive adhesive layer described above were bonded to each other to provide a pressure-sensitive adhesive sheet with release liners (release liner/pressure-sensitive adhesive layer "a"/second pressure-sensitive adhesive layer/release liner).

The resultant pressure-sensitive adhesive sheet with release liners was subjected to the above-mentioned evaluations. The results are shown in Table 1.

### [Comparative Example 4]

### (Preparation of Pressure-sensitive Adhesive (1e))

1 Part by weight (solid content) of a cross-linking agent (manufactured by Mitsui Chemicals, Inc., product name: "TAKENATE D-101A") and 7 parts by weight of a photopolymerization initiator (manufactured by BASF, product name: "Omnirad 127D") were added to the acrylic polymer solution G containing 100 parts by weight of the acrylic polymer G (solid content) to provide a pressure-sensitive adhesive (1e).

### (Preparation of Pressure-sensitive Adhesive (2d))

The pressure-sensitive adhesive (2d) was obtained in the same manner as in Comparative Example 3.

### (Pressure-sensitive Adhesive Sheet)

The pressure-sensitive adhesive (1e) was applied to the silicone-treated surface of a PET release liner (thickness: 38 µm), and was then heated at 130°C for 2 minutes to form a first pressure-sensitive adhesive layer having a thickness of 8 µm.

The pressure-sensitive adhesive (2d) was separately applied to the silicone-treated surface of another PET release liner (thickness: 38 µm), and was then heated at 130°C for 2 minutes to form a second pressure-sensitive adhesive layer having a thickness of 2 µm.

The first pressure-sensitive adhesive layer and the second pressure-sensitive adhesive layer described above were bonded to each other to provide a pressure-sensitive adhesive sheet with release liners (release liner/first pressure-sensitive adhesive layer/second pressure-sensitive adhesive layer/release liner).

The resultant pressure-sensitive adhesive sheet with release liners was subjected to the above-mentioned evaluations. The results are shown in Table 1.

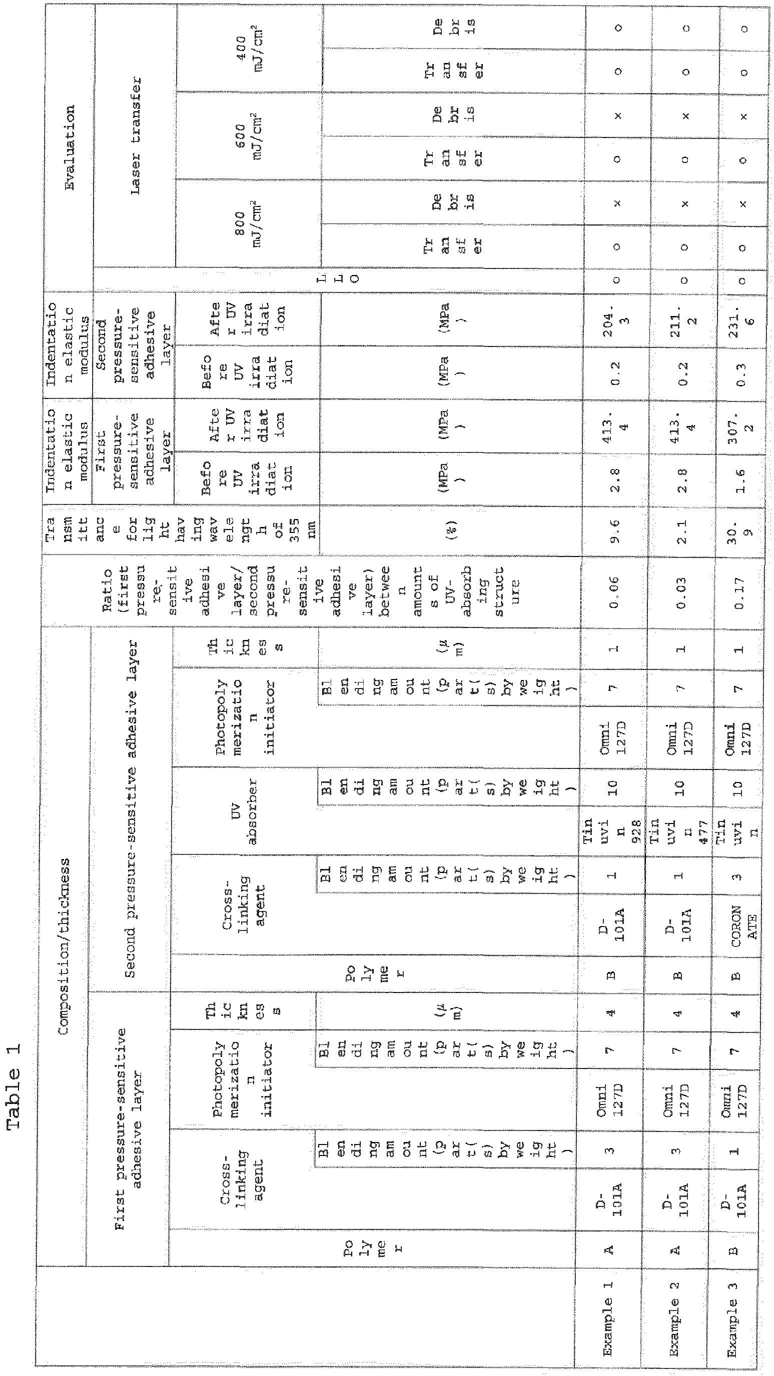

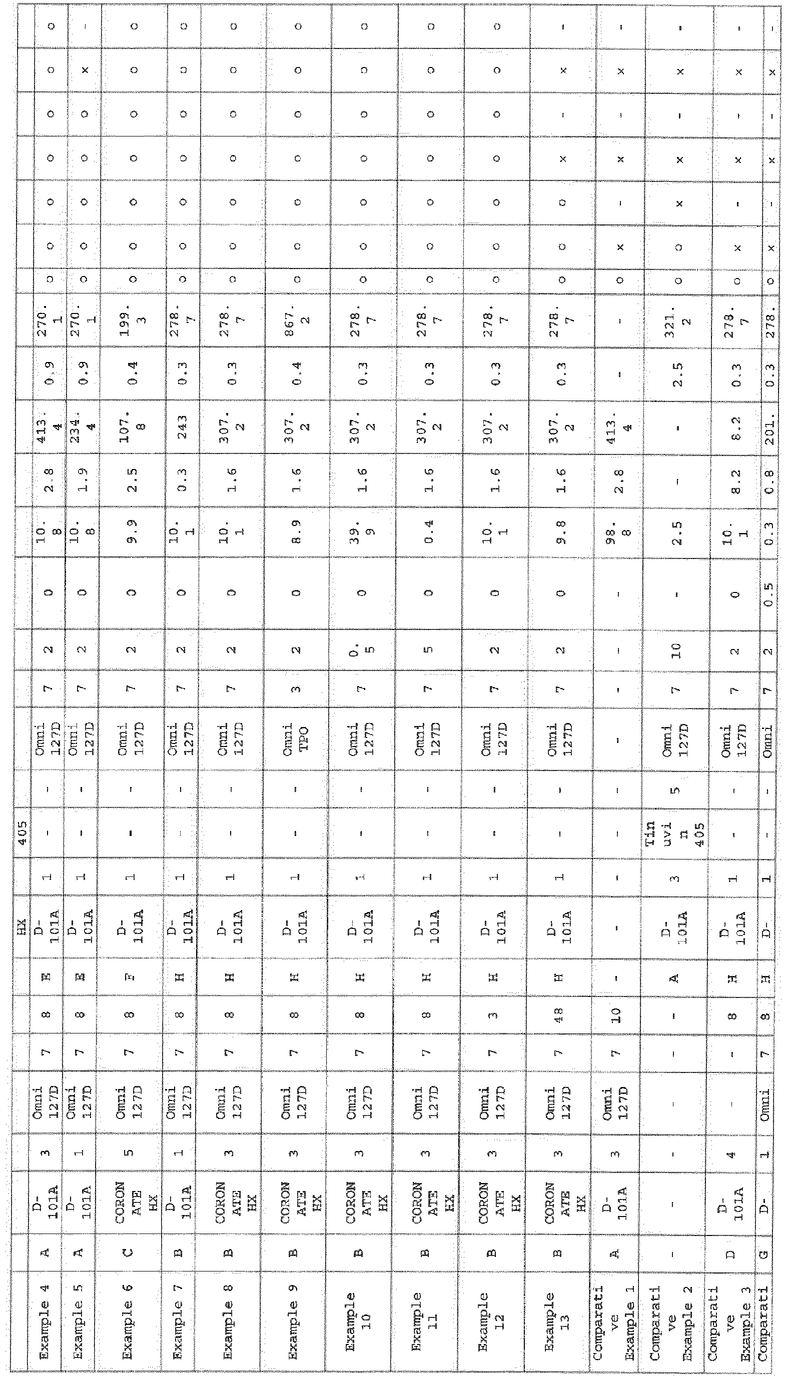

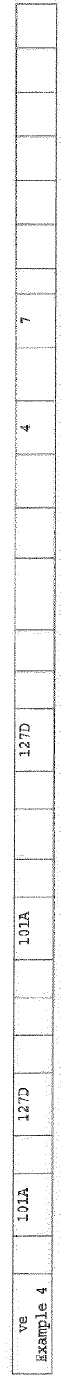

As is apparent from Table 1, according to at least one embodiment of the present invention, there can be obtained a pressure-sensitive adhesive sheet excellent in receivability of an electronic part transferred by a laser liftoff process. In addition, the pressure-sensitive adhesive sheet according to at least one embodiment of the present invention preferably exhibits its peelability by being irradiated with laser light whose output has been appropriately set. Meanwhile, the pressure-sensitive adhesive sheet (Comparative Example 1) free of any UV-absorbing compound and having a single-layer configuration, the pressure-sensitive adhesive sheet (Comparative Example 2) having a single-layer configuration, the pressure-sensitive adhesive sheet (Comparative Example 3) including the pressure-sensitive adhesive layer free of any active energy ray-curable pressure-sensitive adhesive, and the pressure-sensitive adhesive sheet (Comparative Example 4) in which the ratio (amount of UV-absorbing structure in outer surface of first pressure-sensitive adhesive layer/amount of UV-absorbing structure in outer surface of second pressure-sensitive adhesive layer) is more than 0.3 are each poor in peelability at the time of its laser light irradiation.

## Claims

1. A pressure-sensitive adhesive sheet, comprising a pressure-sensitive adhesive laminate including a first pressure-sensitive adhesive layer and a second pressure-sensitive adhesive layer arranged on one surface of the first pressure-sensitive adhesive layer,
wherein the first pressure-sensitive adhesive layer includes an active energy ray-curable pressure-sensitive adhesive A,
wherein the second pressure-sensitive adhesive layer includes an active energy ray-curable pressure-sensitive adhesive B,
wherein the pressure-sensitive adhesive laminate contains a UV-absorbing compound having a UV-absorbing structure, and
wherein an amount of the UV-absorbing structure in an outer surface of the second pressure-sensitive adhesive layer and an amount of the UV-absorbing structure in an outer surface of the first pressure-sensitive adhesive layer satisfy a relationship represented by the following formula:
amount of UV-absorbing structure in outer surface of first pressure-sensitive adhesive layer/amount of UV-absorbing structure in outer surface of second pressure-sensitive adhesive layer≤0.3.

2. The pressure-sensitive adhesive sheet according to claim 1, wherein the pressure-sensitive adhesive sheet has a transmittance of 50% or less for light having a wavelength of 355 nm.

3. The pressure-sensitive adhesive sheet according to claim 1 or 2, wherein the active energy ray-curable pressure-sensitive adhesive B contains a base polymer having the UV-absorbing structure.

4. The pressure-sensitive adhesive sheet according to claim 1 or 2, wherein a HSP distance between a base polymer in the active energy ray-curable pressure-sensitive adhesive A and the UV-absorbing compound in the second pressure-sensitive adhesive layer is 8 or more.

5. The pressure-sensitive adhesive sheet according to claim 1 or 2, wherein the active energy ray-curable pressure-sensitive adhesive B contains a cross-linking agent "a" having a functional group capable of interacting with a functional group of the UV-absorbing compound.

6. The pressure-sensitive adhesive sheet according to claim 1 or 2, wherein the second pressure-sensitive adhesive layer has an initial indentation elastic modulus of 4 MPa or less at 23°C.

7. The pressure-sensitive adhesive sheet according to claim 1 or 2, wherein the second pressure-sensitive adhesive layer is a layer that has an indentation elastic modulus of 150 MPa or more at 23°C after being irradiated with UV light having an integrated light quantity of 460 mJ/cm².

8. The pressure-sensitive adhesive sheet according to claim 1 or 2, wherein the first pressure-sensitive adhesive layer is a layer that has an indentation elastic modulus of 100 MPa or more at 23°C after being irradiated with UV light having an integrated light quantity of 460 mJ/cm².

9. The pressure-sensitive adhesive sheet according to claim 1 or 2, wherein the pressure-sensitive adhesive sheet has a thickness of 60 µm or less.
